(19) Europäisches Patentamt
European Patent Office
Office européen des brevets

(11) **EP 2 563 839 B1**

(12) **EUROPÄISCHE PATENTSCHRIFT**

(45) Veröffentlichungstag und Bekanntmachung des Hinweises auf die Patenterteilung:
**17.12.2014 Patentblatt 2014/51**

(21) Anmeldenummer: **11716915.1**

(22) Anmeldetag: **28.04.2011**

(51) Int Cl.:
***C08G 65/26*** (2006.01)

(86) Internationale Anmeldenummer:
**PCT/EP2011/056739**

(87) Internationale Veröffentlichungsnummer:
**WO 2011/135027 (03.11.2011 Gazette 2011/44)**

(54) **POLYETHERPOLYOLE, VERFAHREN ZUR HERSTELLUNG VON POLYETHERPOLYOLEN, SOWIE DEREN VERWENDUNG ZUR HERSTELLUNG VON POLYURETHANEN**

POLYETHER POLYOLS, METHOD FOR PRODUCING POLYETHER POLYOLS, AND USE THEREOF FOR PRODUCING POLYURETHANES

POLYÉTHERPOLYOLS, PROCÉDÉ DE PRODUCTION DE POLYÉTHERPOLYOLS, ET LEUR UTILISATION POUR PRODUIRE DES POLYURÉTHANNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2010 EP 10161562**

(43) Veröffentlichungstag der Anmeldung:
**06.03.2013 Patentblatt 2013/10**

(73) Patentinhaber: **BASF SE**
**67056 Ludwigshafen (DE)**

(72) Erfinder:
• **KUNST, Andreas**
**67063 Ludwigshafen (DE)**
• **ELING, Berend**
**49448 Lemförde (DE)**
• **LÖFFLER, Achim**
**67346 Speyer (DE)**
• **LUTTER, Heinz-Dieter**
**49459 Lembruch (DE)**
• **HAN, Wei**
**Shanghai 200126 (CN)**
• **MÜLLER, Jens**
**49393 Lohne (DE)**

(56) Entgegenhaltungen:
**EP-A1- 1 712 576          EP-A1- 1 842 866**
**WO-A1-00/14045          WO-A1-2004/020497**
**WO-A1-2006/047436**

**Beschreibung**

Die vorliegende Erfindung betrifft neue Polyetherole, im Speziellen biobasierte Polyetherole, sowie ein Verfahren zur Herstellung der neuen Polyetherole und deren Verwendung zur Herstellung von Polyurethan-Materialien, im Speziellen Polyurethanblock- und Polyurethanformweichschaumstoffen.

In der vorliegenden Offenbarung werden die Begriffe "biobasierte Verbindung/ biobasierter Rohstoff", "nachwachsende Verbindung/ nachwachsender Rohstoff", "natürliche Verbindung/ natürlicher Rohstoff" einheitlich verwendet und bezeichnen alle Verbindungen, die nicht aus fossilen Rohstoffen, wie Erdöl, Erdgas oder Kohle, hergestellt werden, im Gegensatz zu den Verbindungen der Petrochemie, die letzten Endes auf Erdgas oder Erdöl als Ausgangsmaterialien zurückzuführen sind.

Der Ausdruck "fettbasierte Verbindung/ fettbasierter Rohstoff" bezeichnet eine spezielle Klasse biobasierter Verbindungen, und beschreibt Verbindungen, die von Fettsäuren abgeleitet sind, insbesondere Fettsäureester. Dabei bezieht sich der Begriff "Fettsäureester" auf Mono-, Di- oder Triester von Fettsäuren; die letztgenannten Triester von Fettsäuren werden auch als Triglyceride bezeichnet. Triglyceride sind Hauptbestandteile von natürlichen Fetten oder Ölen, wie zum Beispiel Rizinusöl oder Sojaöl.

Der Begriff "Polyetherole" (Polyetherpolyole) im Sinne der vorliegenden Erfindung umfasst auch Polyole, die sowohl Ether- als auch Estereinheiten umfassen.

Polyetherole auf Basis nachwachsender Rohstoffe sind beispielsweise durch ringöffnende Polymerisation von Alkylenoxiden unter Verwendung von biobasierten Startermolekülen herstellbar. Als biobasierte Startermoleküle können neben Sorbitol, Zucker oder Glycerin auch hydroxylgruppenhaltige Fettsäureester und/ oder hydroxylmodifizierte Fettsäureester, zum Beispiel hydroxygruppenhaltige Fette oder Öle und/ oder hydroxymodifizierte Fettderivate, wie fettbasierte Dimerdiole, verwendet werden. Die Klasse der hydroxygruppenhaltigen Fette bzw. Fettderivate wird bereits heute schon zur Herstellung von Polyurethanen durch Reaktion mit Isocyanaten verwendet. Als Beispiele sind in diesem Zusammenhang das Rizinusöl und das Lesquerellaöl zu erwähnen, die beide bereits von Natur aus über Hydroxygruppen verfügen und somit auch direkt in Polyurethanformulierungen einsetzbar sind. Bei den sonstigen natürlichen Ölen, wie beispielsweise Sojabohnenöl, Sonnenblumenöl, Rapsöl oder Palmöl, muss für die Verwendungsmöglichkeit in Polyurethanformulierungen oder für eine Umsetzung mit Alkylenoxiden die Einführung von Hydroxygruppen durch chemische Umsetzungen erfolgen, da diese im Allgemeinen Triglyceride von gesättigten und ungesättigten Fettsäuren sind und somit von Natur aus keine Hydroxygruppen beinhalten.

Die Hydroxylmodifizierung, also die Einführung von Hydroxygruppen, erfolgt in der Regel nach dem herrschenden Stand der Technik durch Derivatisierungsreaktionen bzw. durch Modifikation der Doppelbindungen der ungesättigten Fettsäureester. Nach WO08073729 A2 oder WO04096744 A2 kann dies beispielsweise durch eine Hydroformylierung der Doppelbindungen mit anschließender Hydrierung des Aldehyds erfolgen. Darüber hinaus ist dem Fachmann bekannt, dass die Doppelbindungen der natürlichen Öle durch Umsetzungen mit Peroxocarbonsäuren epoxidiert werden können. Die so erhältlichen epoxidierten Fette lassen sich unter Ausbildung von Hydroxygruppen mit Alkoholen, Wasser oder laut WO2007019051A1 auch mit Carbonsäuren umsetzen. Die Alkoxilierung der auf diesem Wege erhältlichen Hydroxyfette und Umsetzung zu Polyurethanmaterialien ist in EP 0 259 722 B1 beschrieben. Ferner besteht die Möglichkeit, durch Ozonolyse oder auch durch Direktoxidation mit Sauerstoff Hydroxygruppen einzuführen. Eine weitere Möglichkeit, Hydroxyfunktionen in Fettsäureester einzuführen, ist in Adv. Synth. Catal. 2007, 349, 1604 beschrieben worden. So lassen sich die Doppelbindungen der natürlichen Fette durch Umsetzung mit Distickstoffmonoxid zunächst zu Carbonylgruppen umsetzen. Die Carbonylgruppen können anschließend zu sekundären Hydroxygruppen in Anwesenheit von Wasserstoff oder wasserstoffspendenden Reagenzien wie Lithiumaluminiumhydrid reduziert werden.

Wie bereits erwähnt, können die hydroxygruppenhaltigen Fette durch katalytische Umsetzungen mit Alkylenoxiden mit Polyetherketten verlängert werden. Dieser Verfahrensschritt ermöglicht es, verschiedenste Hydroxyzahlen einzustellen. Zudem ermöglicht die Alkoxylierung auch die teilweise Substitution der petrochemischen Polyetherole durch biobasierte Polyetherole, ohne Einbußen bezüglich der mechanischen Eigenschaften beispielsweise in Polyurethan (PU)-Weichschaumstoffen oder bezüglich der Verarbeitbarkeit der Polyetherole in den Formulierungen in Kauf nehmen zu müssen.

Da die oben beschriebenen hydroxyhaltigen Fette bzw. Fettderivate gegenüber basischen Bedingungen empfindliche Estergruppen beinhalten, kann bei diesen biobasierten Rohprodukten nicht auf die klassische Alkalimetallhydroxid-katalysierte Anlagerung von Alkylenoxiden zurückgegriffen werden, da sich die Startermoleküle sonst durch Verseifungsreaktionen zersetzen. Dies würde unweigerlich zu schlechten mechanischen Eigenschaften in Polyurethan-Anwendungen führen und hat darüber hinaus negative Auswirkungen auf die Verarbeitbarkeit der Polyole in den PU-Formulierungen. Vielmehr wird für diesen Verfahrensschritt auf die DMC-katalysierte Anlagerung von Alkylenoxiden zurückgegriffen, da die DMC-Katalysatoren (DMC = Doppelmetallcyanid) die Alkoxilierung der Hydroxygruppen ohne Abbau der Estereinheiten in den Startermolekülen ermöglicht. Die Herstellung von fettbasierten Alkylenoxid-Anlagerungsprodukten mittels DMC-Katalysatoren ist beispielsweise in EP 1 112 243 B1 oder auch in JP 5 163 342 A1 und in WO 06047436 A1 beschrieben worden. Die Verwendung von Rizinusöl-Alkoxilaten in Polyurethanweichschaumstoffen beschreibt das Dokument EP 1 537 159 B1.

Bei der Herstellung von hochelastischem Weichschaum, auch bekannt als HR (High Resilience)-Schaum, benutzt man in der Regel dreifunktionelle Polyole mit höherem Molekulargewicht, in einem typischen Molekulargewichtsbereich von 4500-7500 g/mol. Solche Polyole enthalten meistens Glycerin oder Trimethylolpropan als Startermolekül, angelagert mit Blöcken von Propylenoxid und Ethylenoxid. Der außenseitige Poly(ethylenoxid)block macht in der Regel 13 - 23 Gew. %, bezogen auf das gesamte Molekulargewicht, aus. Durch die Anlagerung von Ethylenoxid erhält man Polyole mit einem primären Hydroxylgruppengehalt zwischen 80 und 90%. Aufgrund dieses hohen primären Hydroxylgruppengehalts werden solche Polyole auch Reaktivpolyole genannt. Diese HR- oder Reaktivpolyole werden sowohl in Block- als auch in Formschäumen verwendet. HR-Schaum wird definiert in der ASTM Methode D3770-91; jedoch wird in der Industrie eine breitere Palette von Schäumen als HR-Schaum anerkannt.

Dem Fachmann ist bekannt, dass mit Hilfe der DMC-katalysierten Anlagerung jedoch keine reaktiven Polyetherole erhältlich sind, die über einen hohen Anteil an terminalen primären Hydroxygruppen verfügen müssen. Reaktive Polyetherole werden allerdings in denjenigen Polyurethanherstellungsverfahren benötigt, in denen es auf eine schnelle Abreaktion der Hydroxygruppen mit den Isocyanaten ankommt. Dies ist insbesondere der Fall, wenn Polyurethan-Formbauteile hergestellt werden sollen, wie beispielsweise Polyurethan-Formweichschaumstoffe oder Polyurethan-Schuhsohlen. Hier kommt es dem Verarbeiter auf möglichst kurze Entformzeiten an, damit die Anlagenauslastung optimal ist und möglichst viele Polyurethanbauteile in einer vorgegebenen Zeit herstellbar sind. Bislang sind reaktive Polyetherole jedoch nur über die klassische alkalimetallkatalysierte Alkoxilierung erhältlich, was die Verwendung von basensensitiven biobasierten Startermolekülen wegen der oben erwähnten Nebenreaktionen wie Verseifungen der Estergruppen unmöglich macht.

EP 1 842 866 A1 und EP 1 712 576 A1 beschreiben Verfahren zur Herstellung von Polyetherolen auf Basis natürlicher Öle und deren Verwendung in PolyurethanSchaumstoffen bzw. Polyurethanelastomeren. Beansprucht wird in diesem Dokument unter anderem auch das Verfahren zur Herstellung von Produkten mit einem reinen Poly(ethylenoxid)-Endblock.

Dem Fachmann ist jedoch bekannt, dass die Verwendung von reinem Ethylenoxid als Endblock bei der DMC-katalysierten Anlagerung an hydroxyfunktionelle Startermoleküle zu inhomogenen und trüben Produkten führt. Dieses Phänomen ist bereits in der Lehre von US 5 563 221 beschrieben worden und lässt sich so erklären, dass der DMC-Katalysator vorzugsweise die Anlagerung von Ethylenoxid (EO) an die primären Hydroxygruppen und nicht an die sekundären Hydroxygruppen katalysiert. Dies führt dazu, dass einige Polyetherketten sehr lange Poly(ethylenoxid)-Endblöcke aufweisen, während andere Polyetherketten keine Poly(ethylenoxid)-Endblöcke aufweisen. Da die Moleküle mit den langen Poly(ethylenoxid)-Ketten unverträglich mit dem Polyether-Kernblock sind, der üblicherweise aus einem hydrophoben Poly(propylenoxid (PO))-Block oder einem Poly(propylenoxid)-Poly(ethylenoxid)-Mischblock mit hohem Poly(propylenoxid)-Anteil besteht, führt dies zu Phasenseparationen, die aufgrund dessen eine unerwünschte sichtbare Trübung der Produkte verursachen. Die trüben Produkte sind darüber hinaus nicht langzeitphasenstabil; es bildet sich nach einer längeren Standzeit ein zweiphasiges Gemisch aus Poly(ethylenoxid)-reichen Phasen und Poly(ethylenoxid)-armen Phasen aus. Die bereits oben erwähnte höhere Reaktivität der primären Hydroxygruppen gegenüber den sekundären Hydroxygruppen des Polyether-Kernblocks führt zudem dazu, dass die Produkte nur über einen geringen Anteil an terminalen primären Hydroxygruppen verfügen, was unerwünscht bei der Verwendung für die Herstellung von Polyurethan-Formschaum ist.

Ein weiterer Nachteil solcher Polyole ist das enge Prozessfenster. Das heißt, dass, abhängig von der Polyolarchitektur, zum Beispiel bei der Polyurethan (PU)-Herstellung Schäume erhalten werden, die entweder zu instabil oder zu geschlossenzellig sind. Im ersten Fall kann es in Extremfällen zum Schaumkollaps kommen, oder es wird ein Schaum erhalten, der grobzellig mit deutlichen höheren Dichten als erwartet ist. Im zweitgenannten Fall zeigen die Schäume im Extremfall Schrumpf oder eine deutlich reduzierte Luftdurchlässigkeit. Um diesen Mangel zu beheben, wird beispielsweise in DE102004047406 das Molekulargewicht und der Poly(ethylenoxid)-Gehalt im Polyol so gewählt, dass Schäume mit guten Eigenschaften erhalten werden. In EP97/00306 wurde die Länge des ersten Anlagerungs-Blocks, bestehend aus Poly(propylenoxid), auf 35% beschränkt.

EP 1 790 678 A1 beschreibt ein Verfahren zur in situ-Herstellung von auf Pflanzenöl basierenden Polyetherolen durch Epoxidierung/ Ringöffnung von natürlichen Ölen wie z. B. Sojaöl mit anschließender DMC-katalysierter Alkoxilierung. In dem Dokument wird beschrieben, dass in einer Ausführungsform bevorzugt als Endblock reines Ethylenoxid oder Mischungen aus Propylenoxid und Ethylenoxid mit hohem E-thylenoxidanteil zudosiert werden können, so dass die an die modifizierten Triglyceride und die ggf. zugesetzten Costarter-Verbindungen angebundenen Polyetherketten 40 bis 100 % primäre OH-Endgruppen aufweisen. Dem Fachmann ist jedoch bekannt, dass für einen Anteil von mehr als 40% primärer terminaler Hydroxygruppen das Ethylenoxid zu Propylenoxid-Verhältnis im Endblock so hoch sein müsste, dass unweigerlich trübe und inhomogene Produkte resultieren würden.

Wie bereits oben erwähnt, beschreibt das Dokument EP 1 537 159 B1 die Verwendung von DMC-katalysierten Alkylenoxid-Anlagerungungsprodukten an Rizinusöl für die Herstellung von Polyurethanschaumstoffen. Erwähnt ist dort, dass die Polyetherole vorzugsweise einen reinen Poly(propylenoxid)-Endblock aufweisen. Diese Produkte lassen sich gut in Polyurethanblockweichschaumstoffen einsetzen. Aufgrund der erwähnten geringen Reaktivität und des relativ niedrigen Molekulargewichts können sie jedoch nur sehr eingeschränkt in HR-Polyurethanformweichschaumstoffen oder in Polyurethan-Formschaum, so wie Schuhsohlen, verwendet werden. Auch wenn in diesem Dokument erwähnt ist, dass für Formweichschaumstoffe üblicherweise Polyetherole mit einem hohen Gehalt an primären Hydroxygruppen durch einen reinen Ethylenoxid-Endblock verwendet werden, wird nicht näher beschrieben, mit welchem Verfahren derartige Produkte zugänglich sind.

EP 1 632 513 B1, EP 1 022 300 B1 und US 5 605 939 A1 beschreiben Verfahren zur Herstellung oder die Verwendung von reaktiven Polyetherolen, die über einen DMC-katalysierten Poly(alkylenoxid)-Kernblock und einen alkalimetallkatalysierten Poly(ethylenoxid)-Endblock verfügen. Das Verfahren zur Herstellung dieser Produkte kann jedoch nicht bei hydroxyfunktionalisierten Fettsäureestem als Starterkomponente angewandt werden, da diese sich, wie bereits oben erwähnt, unter den basischen Bedingungen der Alkalimetallkatalyse zersetzen würden.

Zusammenfassend kann gesagt werden, dass mit der DMC-Technologie bislang nur dann phasenstabile biobasierte Polyetherole erhalten werden können, wenn die Produkte einen reinen Poly(propylenoxid)-Endblock oder einen Poly(propylenoxid)-Poly(ethylenoxid)-Mischblock mit hohem Poly(propylenoxid)-Anteil aufweisen. Wie bereits erwähnt, sind diese Produkte aufgrund der terminalen sekundären Hydroxygruppen jedoch wenig geeignet für die Herstellung von Polyurethan-Formschaumstoffen.

Biobasierte reaktive, klare und phasenstabile Polyetherole sind aber dennoch gerade aufgrund der Diskussion um Nachhaltigkeit von kommerziellem Interesse.

Zudem sind auch bei Polyetherolen auf Basis petrochemischer Rohstoffe die genannten Eigenschaften erwünscht.

Weiterhin ist es wünschenswert, dass sich Polyetherole, insbesondere biobasierte Polyetherole, in Polyurethan (PU)-Formulierungen gut verarbeiten lassen und in den PU-Produkten gute mechanische Eigenschaften vermitteln sollten. Insbesondere sollten sich die Polyetherole gut für die Herstellung von hochelastischen Polyurethanform- und Polyurethanblockweichschaumstoffen verwenden lassen.

Es war somit die Aufgabe der vorliegenden Erfindung, ein Verfahren zu entwickeln, das den Zugang zu reaktiven, phasenstabilen und klaren Polyetherolen mit vorteilhaften Verarbeitungseigenschaften und mechanischen Eigenschaften in PU-Formulierungen ermöglicht, wobei insbesondere die Herstellung aus biobasierten Rohstoffen im Fokus stand.

Die Aufgabe der vorliegenden Erfindung konnte dadurch gelöst wenden, dass die DMC-katalysierte Anlagerung der Alkylenoxide an Rizinnsöl in mindestens zwei Verfahrensabschnitten in mindestens zwei verschiedenen Poly(alkylenoxid)-Blöcken erfolgt, wobei die Anlagerung jeweils unter Verwendung von Ethylenoxid zu erfolgen hat.

Der Gegenstand der vorliegenden Erfindung ist somit ein Verfahren gemäß Anspruch 1 zur Herstellung von Polyetherpolyolen, wobei Rizinnsöl unter Zuhilfenahme eines Doppelmetallcyanid-Katalysators in mindestens zwei Verfahrensabschnitten mit jeweils einem Gemisch aus Ethylenoxid und mindestens einem weiteren von Ethylenoxid verschiedenen Alkylenoxid zur Reaktion gebracht wird.

Ein "Verfahrensabschnitt" im Sinne der vorliegenden Erfindung bezieht sich auf jeweils eine von mindestens zwei verschiedenen Phasen des erfindungsgemäßen Verfahrens, die sich durch die jeweilige Zusammensetzung des zudosierten Gemischs aus Ethylenoxid und mindestens einem weiteren von Ethylenoxid verschiedenen Alkylenoxid voneinander unterscheiden, wobei die jeweilige Zusammensetzung eines Gemischs in einem Verfahrensabschnitt für einen Zeitraum von mindestens einer Minute, bevorzugt für einen Zeitraum von mindestens 30 Minuten, konstant bleibt. Hierbei sind Variationen des Massenverhältnisses der im jeweiligen Gemisch enthaltenen Verbindungen von bis zu 1 % noch als konstant anzusehen.

Dabei bedeutet der Begriff "Zusammensetzung" in diesem Kontext sowohl die im jeweiligen Gemisch enthaltenen Verbindungen, als auch deren Massenverhältnisse zueinander.

Das bedeutet zum Beispiel, dass in einem ersten Verfahrensabschnitt für eine Stunde ein Gemisch aus Ethylenoxid und Propylenoxid mit einem konstanten Massenverhältnis zudosiert wird. Sobald nach einem Dosierstopp für weitere 30 Minuten ein Gemisch aus Ethylenoxid und 1,2-Butylenoxid mit einem konstanten Massenverhältnis zudosiert wird, stellt dies einen neuen Verfahrensabschnitt dar.

Ebenso könnte beispielsweise in einem ersten Verfahrenabschnitt zwei Stunden lang ein Gemisch aus Ethylenoxid und Propylenoxid in einem konstanten Massenverhältnis von 40:60 zudosiert werden. Falls nun dieses Massenverhältnis, zum Beispiel nach einem Dosierstopp oder einer langsamen kontinuerlichen Anpassung ("Rampe"), variiert wird und dann eine Stunden lang ein Gemisch aus Ethylenoxid und Propylenoxid in einem konstanten Massenverhältnis von 50:50 weiter dosiert wird, so stellt dies ebenfalls einen neuen Verfahrensabschnitt dar.

Die Zusammensetzung des jeweiligen zudosierten Gemischs muss sich hierbei in einem Verfahrensabschnitt nicht von allen anderen Zusammensetzungen der jeweils zudosierten Gemische in allen einzelnen Verfahrensabschnitten unterscheiden; es genügt, dass sich die Zusammensetzung des zudosierten Gemischs in einem spezifischen Verfahrensabschnitt von den jeweiligen Zusammensetzungen der zudosierten Gemische des jeweils vorangehenden und des ggf. nachfolgenden Verfahrensabschnitts unterscheidet.

Der Wechsel von einem Verfahrensabschnitt zum nächsten kann dabei zum Beispiel so erfolgen, dass zunächst ein bestimmtes erstes Gemisch mit konstanter Zusammensetzung über einen gewissen Zeitraum zudosiert wird, dann ein Dosierstopp erfolgt, und darauf folgend ein zweites Gemisch mit konstanter Zusammensetzung über einen gewissen Zeitraum zudosiert wird, wobei sich das zweite Gemisch durch seine Zusammensetzung vom ersten Gemisch unterscheidet.

Andererseits kann der Wechsel von einem Verfahrensabschnitt zum nächsten beispielsweise auch so erfolgen, dass zunächst ein bestimmtes erstes Gemisch mit konstanter Zusammensetzung über einen gewissen Zeitraum zudosiert wird, dann die Zusammensetzung dieses Gemischs kontinuierlich, sozusagen über eine Rampe, verändert wird, und darauffolgend ein zweites Gemisch mit konstanter Zusammensetzung über einen gewissen Zeitraum zudosiert wird, wobei sich das zweite Gemisch durch seine Zusammensetzung vom ersten Gemisch unterscheidet.

In einer bevorzugten Ausführungsform umfasst das erfindungsgemäße Verfahren genau zwei Verfahrensabschnitte.

Die Bestandteile des jeweiligen Gemischs aus Ethylenoxid und mindestens einem weiteren von Ethylenoxid verschiedenen Alkylenoxid können über jeweils separate Zuläufe getrennt in das Reaktionsgefäß dosiert werden, wo sich dann das jeweilige Gemisch in situ ausbildet, oder bereits vor dem Eintritt in das Reaktionsgefäß zu einem Gemisch vereinigt werden, zum Beispiel in einem vorgeschalteten weiteren Gefäß.

Bevorzugt ist die Vereinigung des Gemischs aus den Alkylenoxiden schon vor dem Eintritt in das Reaktionsgefäß.

Bevorzugt werden in den einzelnen Verfahrensabschnitten jeweils Ethylenoxid und mindestens ein weiteres von Ethylenoxid verschiedenes Alkylenoxid gleichzeitig dosiert, wodurch im Reaktor jeweils ein Gemisch aus Ethylenoxid und mindestens einem weiteren von Ethylenoxid verschiedenen Alkylenoxid mit konstanter Zusammensetzung vorhanden ist.

In einer bevorzugten Ausführungsform des erfindungsgemäßen Verfahrens werden die Dosierung des Ethylenoxids und des mindestens einen weiteren von Ethylenoxid verschiedenen Alkylenoxids am Ende des letzten Verfahrensabschnitts (Aufbringung des "Caps" bzw. Endblocks) gleichzeitig abgeschaltet. "Gleichzeitig" bedeutet in diesem Zusammenhang, dass die jeweiligen Dosierungen der verschiedenen Alkylenoxide, die wie oben ausgeführt direkt in in situ im Reaktionsgefäß oder bereits vor dem Eintritt in das Reaktionsgefäß zu einem Gemisch vereinigt werden können, in einem zeitlichen Abstand von weniger als 20 Sekunden, bevorzugt weniger als 10 Sekunden, besonders bevorzugt weniger als 5 Sekunden voneinander abgeschaltet werden.

Dadurch wird gewährleistet, dass die Zusammensetzung des im letzten Verfahrensabschnitt zudosierten Gemischs bis zum Ende der Dosierung konstant bleibt. Dies ist hilfreich, um die oben angesprochenen Nachteile wie Bildung langer Poly(ethylenoxid)-Endblöcke zu vermeiden.

Es hat sich überraschenderweise gezeigt, dass die Verwendung von Alkylenoxid/. Ethylenoxid-Gemischen für den bzw. die ersten Mischblock/ Mischblöcke (core/ Kern), der bzw. die im ersten bzw. in den ersten Verfahrensabschnitt hergestellt wird/ werden, vorteilhaft für die Klarheit bzw. Phasenstabilität der Produkte ist. Die Verwendung von Alkylenoxid/ Ethylenoxid-Mischblöcken im terminalen Endblock, der im letzten Verfahrensabschnitt hergestellt wird, ist vorteilhaft für die Reaktivität der Produkte. Weiterhin können die erfindungsgemäßen Polyetherole gut in PolyurethanFormulierungen verarbeitet werden, was anzunehmenderweise auf den Anteil an EO im Kernblock zurückzuführen ist, und führen bei PU-Anwendungen zu offenzelligen Schäumen.

Somit unterscheiden sich die erfindungsgemäßen Produkte strukturell von den klassischen Formweichschaum-Polyetherolen jedenfalls dadurch, dass sie vor allem oder ausschließlich a) fettbasierte Starter beinhalten, b) über keinen reinen Poly(ethylenoxid)-Endblock verfügen, und c) über keinen reinen Poly(propylenoxid)-Kernblock verfügen.

Als DMC (Doppelmetallcyanid)-Katalysatoren werden bevorzugt Co-Zn, Fe-Zn, und/ oder Ni-Zn-basierte Doppelmetallcyanidkatalysatoren verwendet; besonders bevorzugt werden Zinkhexacyanocobaltat-Katalysatoren verwendet, wie sie beispielsweise in US 3 404 109, US 3 427 256, US 3 427 334, US 3 427 335, US 3 829 505, US 3 941 849, US 4 472 560, US 4 477 589, US 5 158 922, US 5 470 813, US 5 482 908, US 5 545 601, EP 0 700 949, EP 0 743 093, EP 0 761 708; WO 97/40086, WO 98/16310,

WO 00/47649 sowie JP 4 145 123 beschrieben wurden. Die Katalysatorkonzentration liegt üblicherweise zwischen 5 und 1000 ppm, bevorzugt zwischen 20 und 250 ppm, besonders bevorzugt zwischen 50 und 150 ppm, bezogen auf die Gesamtmasse des herzustellenden Endproduktes.

Der DMC-Katalysator kann entweder direkt als Feststoff oder suspendiert in einem Polyetherol zusammen mit dem biobasierten Starter vorgelegt werden. Als Suspensionspolyetherole werden in der Regel nach dem Stand der Technik Alkylenoxid-Anlagerungsprodukte von zwei-, drei-, vier- oder fünffunktionellen Alkoholen wie Monopropylenglykol, Dipropylenglykol, Monoethylenglykol, Diethylenglykol, 1,4-Butandiol, Glycerin, Trimethylolpropan oder Pentaerythritol eingesetzt. Diese Suspensionspolyetherole haben üblicherweise ein Molekulargewicht zwischen 300 und 5000 g/mol, bevorzugt zwischen 300 und 1000 g/mol und werden in der Regel über die alkalimetallkatalysierte Anlagerung von Alkylenoxiden erhalten.

Die beim erfindungsgemäßen Verfahren im jeweiligen Gemisch verwendeten, von Ethylenoxid verschiedenen Alkylenoxide werden bevorzugt aus der Gruppe umfassend Propylenoxid, 1,2-Butylenoxid, 2,3-Butylenoxid, Isobutylenoxid, 1,2-Pentenoxid, Styroloxid, Epichlorhydrin, Cyclohexenoxid, und höhere Alkylenoxide wie $C_5$-$C_{30}$-$\alpha$-Alkylenoxide, ausgewählt.

In einer bevorzugten Ausführungsform wird in mindestens einem Verfahrensabschnitt ein Gemisch aus Ethylenoxid und genau einem weiteren von Ethylenoxid verschiedenen Alkylenoxid verwendet.

In einer besonders bevorzugten Ausführungsform wird in allen Verfahrensabschnitten jeweils ein Gemisch aus Ethylenoxid und genau einem weiteren von Ethylenoxid verschiedenen Alkylenoxid verwendet.

In einer bevorzugten Ausführungsform wird in mindestens einem Verfahrensabschnitt mindestens ein weiteres von Ethylenoxid verschiedenes Alkylenoxid des jeweiligen Gemischs ausgewählt aus der Gruppe umfassend Propylenoxid, 1,2-Butylenoxid, 2,3-Butylenoxid.

In einer ebenfalls bevorzugten Ausführungsform werden in mindestens einem Verfahrensabschnitt alle weiteren von Ethylenoxid verschiedenen Alkylenoxide des jeweiligen Gemischs ausgewählt aus der Gruppe umfassend Propylenoxid, 1,2-Butylenoxid, 2,3-Butylenoxid.

In einer besonders bevorzugten Ausführungsform wird in allen Verfahrensabschnitten mindestens ein weiteres von Ethylenoxid verschiedenes Alkylenoxid des jeweiligen Gemischs ausgewählt aus der Gruppe umfassend Propylenoxid, 1,2-Butylenoxid, 2,3-Butylenoxid.

In einer ebenfall besonders bevorzugten Ausführungsform werden in allen Verfahrensabschnitten alle weiteren von Ethylenoxid verschiedenen Alkylenoxide des jeweiligen Gemischs ausgewählt aus der Gruppe umfassend Propylenoxid, 1,2-Butylenoxid, 2,3-Butylenoxid.

In einer weiteren bevorzugten Ausführungsform ist in mindestens einem Verfahrensabschnitt mindestens ein weiteres von Ethylenoxid verschiedenes Alkylenoxid des jeweiligen Gemischs Propylenoxid.

In einer weiteren bevorzugten Ausführungsform ist in allen Verfahrensabschnitten mindestens ein weiteres von Ethylenoxid verschiedenes Alkylenoxid des jeweiligen Gemischs Propylenoxid.

In einer besonders bevorzugten Ausführungsform wird in mindestens einem Verfahrenabschnitt ein Gemisch bestehend aus Ethylenoxid und Propylenoxid verwendet. In einer weiteren besonders bevorzugten Ausführungsform wird in allen Verfahrensabschnitten jeweils ein Gemisch bestehend aus Ethylenoxid und Propylenoxid verwendet.

In einer weiteren besonders bevorzugten Ausführungsform umfasst das erfindungsgemäße Verfahren genau zwei Verfahrensabschnitte, wobei in beiden Verfahrensabschnitten jeweils ein Gemisch bestehend aus Ethylenoxid und Propylenoxid verwendet wird.

Gemäß dem erfindungsgemäßen Verfahren zur Herstellung von Polyetherpolyolen umfasst das Gemisch aus Ethylenoxid und mindestens einem weiteren von Ethylenoxid verschiedenen Alkylenoxid in den dem letzten Verfahrensschritt vorausgehenden Verfahrensabschnitten jeweils Ethylenoxid, in Bezug zur Gesamtmasse aller weiteren im Gemisch enthaltenen von Ethylenoxid verschiedenen Alkylenoxide, in einem Massenanteil im Bereich von 35:65 bis 1:99, bevorzugt von 30:70 bis 5:95.

Gemäß dem erfindungsgemäßen Verfahren zur Herstellung von Polyetherpolyolen umfasst das Gemisch aus Ethylenoxid und mindestens einem weiteren von Ethylenoxid verschiedenen Alkylenoxid im letzten Verfahrensabschnitt Ethylenoxid, in Bezug zur Gesamtmasse aller weiteren im Gemisch enthaltenen von Ethylenoxid verschiedenen Alkylenoxide, in einem Massenanteil im Bereich von 35:65 bis 75:25, bevorzugt von 40:60 bis 70:30.

In dem erfindungsgemäß herstellbaren Polyetherol beträgt in einer bevorzugten Ausführungsform der Massenanteil der insgesamt enthaltenen Ethylenoxid-Einheiten, in Bezug auf alle enthaltenen Alkylenoxid-Einheiten, von 10 bis 35 Gew.%, bevorzugt von 15 bis 30 Gew.%.

Beim erfindungsgemäßen Verfahren wird somit im ersten Verfahrensabschnitt zunächst ein Poly(alkylenoxid)block hergestellt, wobei der erste Poly(alkylenoxid)block einen gewissen Anteil Ethylenoxid (EO)-Einheiten und mindestens eine weitere Alkylenoxid (AO)-Einheit enthält. Dann wird in einem zweiten Verfahrensabschnitt ein zweiter Poly(alkylenoxid)block hergestellt und an den ersten Poly(alkylenoxid)block angelagert, wobei der zweite Poly(alkylenoxid)block ebenfalls EO-Einheiten und mindestens eine weitere AO-Einheit enthält, wobei jedoch die Zusammensetzungen der Blöcke, wie oben definiert, voneinander verschieden sind.

Die neben den EO-Einheiten in den jeweiligen Poly(alkylenoxid)blöcken enthaltenen Alkylenoxid-Einheiten müssen nicht notwendigerweise identisch sein. So können beispielsweise im ersten Poly(alkylenoxid)block neben EO-Einheiten Propylenoxid (PO)-Einheiten enthalten sein, während im zweiten Poly(alkylenoxid)block neben EO-Einheiten Propylenoxid- und 1,2-Butylenoxid-Einheiten enthalten sein können.

Wahlweise kann bzw. können in einem bzw. mehreren weiteren Verfahrensabschnitt(en) nach der Herstellung und Anlagerung des zweiten Poly(alkylenoxid)blocks ein weiterer Poly(alkylenoxid)block oder mehrere weitere Poly(alkylenoxid)blöcke angelagert werden, wobei sich wiederum die Zusammensetzung des jeweiligen anzulagernden Blocks, wie oben definiert, von der Zusammensetzung des jeweils vorausgehenden Blocks unterscheidet.

Die Anlagerung der Alkylenoxide in den jeweiligen Verfahrensabschnitten erfolgt üblicherweise bei Temperaturen im Bereich zwischen 60°C und 180°C, vorzugsweise zwischen 100 und 140°C, bei Drücken im Bereich zwischen 0 und 20 bar, vorzugsweise zwischen 0 und 10 bar. In einer speziellen Ausführungsform erfolgt die Anlagerung der verschiedenen Poly(alkylenoxid)-Mischblöcke bei jeweils unterschiedlichen Temperaturen in den jeweiligen Verfahrensabschnitten. Die Polyaddition kann in Substanz oder einem inerten organischen Lösungsmittel, wie Toluol und/ oder Tetrahydrofuran, durchgeführt werden. Die Menge an Lösungsmittel beträgt üblicherweise 10 Gew.-% bis 30 Gew.-%, bezogen auf die Menge des herzustellenden Endproduktes.

Die Mischung aus der biobasierten Startsubstanz und dem DMC-Katalysator kann vor Beginn der Reaktion mit Alkylenoxiden gemäß der Lehre von WO 98/52689 durch Strippen vorbehandelt werden.

In einer weiteren Ausführungsform können, analog zu der Offenbarung von DD 203734/735 und EP 879 259 B1, neben den Alkylenoxiden während der Synthese ein oder mehrere weitere Starteralkohole (Costarter) zudosiert werden, die mit dem vorgelegten identisch oder von diesem verschieden sein können. Solche Starterverbindungen weisen bevorzugterweise Funktionalitäten von 2 - 8 auf. Beispiele sind Propylenglykol, Ethylenglykol, Diethylenglykol, Dipropylenglykol, 1,2-, 1,3-, 1,4-Butandiol, Hexandiol, Pentandiol, 3-Methyl-1,5-Pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff, sowie Mannichbasen.

Beispiele für gegebenenfalls zugesetzte Mono- oder Polyamine sind Ethylendiamin, 1,3-Diaminopropan, 1,4-Diaminobutan, Hexamethylendiamin, Ethanolamin, Diethanolamin, Diethylentriamin, Anilin, Piperazin, die Isomere des Toluoldiamins und die Isomere des (Diaminodiphenyl)methans. Bevorzugt werden jedoch aminogruppenfreie Costarter zugesetzt, da diese die DMC-Aktivität nicht negativ beeinflussen. Die Costarter können auch in einem vorgeschalteten Schritt durch Alkylenoxidaddition bereits vorverlängert worden sein, beispielsweise um sie zu verflüssigen oder ihre Verträglichkeit mit dem Reaktionsgemisch zu erhöhen.

Weitere geeignete Costarterverbindungen sind Polyesterole, die nach dem herrschenden Stand der Technik in der Regel durch katalysierte Kondensation von organischen Dicarbonsäuren, wie z. B. Bemsteinsäure, Glutarsäure, Adipinsäure, Korksäure, Azelainsäure, Sebacinsäure, Decandicarbonsäure, Dodecandicarbonsäure, Maleinsäure, Fumarsäure, Phthalsäure, Isophthalsäure oder Terephthalsäure oder Gemischen hieraus mit mehrwertigen Alkoholen, wie z. B. Ethandiol, Diethylenglykol, 1,2- bzw. 1,3-Propandiol, Dipropylenglykol, Methyl-1,3-Propandiol, 1,4-Butandiol, 1,5-Pentandiol, 3-Methyl-1,5-pentandiol, 1,6-Hexandiol, Neopentylglykol, 1,1 O-Decandiol, 1,12-Dodecandiol, Glycerin, Trimethylolpropan, Pentaerythrit oder Gemischen hieraus bei Temperaturen von 150°C bis 300°C, vorzugsweise zwischen 180 und 230 °C, und unter vermindertem Druck hergestellt werden. Vorzugsweise werden dabei zweiwertige Alkohole verwendet.

In einer besonderen Ausführungsform können weitere Costarter bereits im Reaktor vorgelegt werden. Der Starter oder das Startergemisch bzw. Teile desselben können dem Reaktor aber auch während der Reaktion gemeinsam mit dem (den) Alkylenoxid(en) kontinuierlich zugeführt werden. Hierbei wird üblicherweise bereits ein Alkylenoxid-Anlagerungsprodukt mit im Reaktor vorgelegt. Dies kann beispielsweise ein Anlagerungsprodukt aus den oben aufgeführten Starterverbindungen, insbesondere Starteralkoholen, sein oder auch das Reaktionsprodukt des erfindungsgemäßen Verfahren.

In einer weiteren Aufführungsform kann dem Reaktor analog zur Lehre von WO-A 97/29146 und WO-A 98/03571 sowie US 5 689 012 kontinuierlich das Reaktionsprodukt entnommen werden, so dass der gesamte Herstellprozess vollkommen kontinuierlich erfolgen kann. Dabei kann auch der DMC-Katalysator, in der Regel suspendiert in einem Polyol, kontinuierlich zugeführt werden.

Die DMC-katalysierte Anlagerung der Alkylenoxide kann in Analogie zur Lehre von US 2007 0265367, US 5 145 883, US 3 538 043, US 5 032 671, US 2007 0088146, WO 2007 020879, US 2008 0021154 in Gegenwart weiterer Monomerer, wie z. B. zyklischer Anhydride (wie Phthalsäureanhydrid, Trimellitsäureanhydrid, Pyromellitsäureanhydrid, Tetrahydrophthalsäureanhydrid, Maleinsäureanhydrid, Itaconsäureanhydrid, Bernsteinsäureanhydrid) und/ oder zyklischer Ester (wie Lactone, im Speziellen ε-Caprolactone, γ-Butyrolacton, Lactide) und/ oder Kohlenstoffdioxid durchgeführt werden.

Dabei kann in einer Ausführungsform wenigstens eine dieser zusätzlichen Komponenten aus nachwachsenden Rohstoffen hergestellt sein, z. B. durch fermentative Prozesse. Beispielsweise kann Bernsteinsäure durch fermentative Prozesse aus nachwachsenden Rohstoffen hergestellt werden, die in einem weiteren Verfahrenschritt zu Bernsteinsäureanhydrid umgesetzt werden kann. Diese Monomere können entweder zusammen mit der Starterverbindung in dem Reaktionsgefäß mit vorgelegt werden oder komplett oder teilweise zusammen mit den Alkylenoxiden während der Umsetzung zudosiert werden.

Nach Beendigung der Anlagerung der Alkylenoxide wird der Polyetheralkohol in der Regel nach üblichen Verfahren aufgearbeitet, indem die nicht umgesetzten Alkylenoxide sowie leicht flüchtige Bestandteile entfernt werden, üblicherweise durch Destillation, Wasserdampf- oder Gasstrippen und/ oder anderen Methoden der Desodorierung. Falls erforderlich, kann auch eine Filtration erfolgen.

Den nach dem erfindungsgemäßen Verfahren erhältlichen Reaktionsprodukten können ggf. Alterungsschutzmittel, wie z. B. Antioxidantien, zugesetzt werden. Weiterhin können zum Beispiel Additive zugesetzt werden, die die Phasenstabilität des erfindungsgemäßen Polyols oder Gemischen davon mit anderen Polyolen noch weiter verbessern und die Trübung der Polyetherole zu vermeiden helfen. In der Regel sind das Komponenten, die an der Grenzfläche aktiv sind. Es gibt viele oberflächenaktive Substanzen, zum Beispiel Tenside und Polyalkylenglykole, hergestellt von BASF SE unter den Handelsnamen Lutensol®, Plurafac®, Pluronic®, Pluriol® und Emulan®, und auch Silikate und silikonhaltige Tenside. Eine weitere Klasse von Tensiden wird beschrieben in DE102008000243.

Als weitere Beispiele seien hier kommerziell erhältliche Zubereitungen auf Basis von Siliziumdioxid wie ES-P 150 von der Firma Evonik, Essen, oder auch nichtionische und ionische Tenside, sowie Wasser erwähnt.

Ein weiterer Gegenstand der Erfindung ist ein Polyetherpolyol, das nach dem erfindungsgemäßen Verfahren herstellbar ist.

Die erfindungsgemäß herstellbaren, fettbasierten Polyetherole haben in der Regel Hydroxywerte im Bereich zwischen 100 und 10 mg KOH/g, bevorzugt im Bereich zwischen 50 und 20 mg KOH/g.

Die Funktionalität der erfindungsgemäß herstellbaren biobasierten Polyetherole liegt in der Regel zwischen 1.5 und 6, bevorzugt zwischen 2 und 4. Die Molekulargewichte liegen in der Regel zwischen 1000 und 10.000 g/mol, bevorzugt zwischen 1500 und 7000 g/mol, besonders bevorzugt zwischen 2000 und 6000 g/mol.

Die Viskosität der Polyetherol-Produkte liegt in der Regel zwischen 200 und 20.000 mPas, bevorzugt zwischen 400 und 6000 mPas.

Der Anteil an terminalen primären Hydroxygruppen in den Polyetherol-Produkten liegt in der Regel zwischen 10 und 40%, bevorzugt zwischen 20 und 40%.

In einer bevorzugten Ausführungsform des erfindungsgemäßen Verfahrens zur Herstellung von Polyetherpolyolen wird als Doppelmetallcyanidkatalysator Zinkhexacyanocobaltat Verwendet, wobei das Verfahren zwei Verfahrensabschnitte umfasst, und wobei das Gemisch aus mindestens zwei voneinander verschiedenen Alkylenoxiden in beiden Verfahrensabschnitten jeweils aus Ethylenoxid und Propylenoxid besteht, wobei im ersten Verfahrensabschnitt das Gemisch aus mindestens zwei voneinander verschiedenen Alkylenoxiden Ethylenoxid und Propylenoxid in einem Massenverhältnis im Bereich von 10:90 bis 20:80 umfasst, und wobei im zweiten Verfahrensabschnitt das Gemisch aus Ethylenoxid und mindestens einem weiteren von Ethylenoxid verschiedenen Alkylenoxid Ethylenoxid und Propylenoxid in einem Massenverhältnis im Bereich von 50:50 bis 70:30 umfasst.

Ein weiterer Gegenstand der vorliegenden Erfindung ist somit ein Polyetherpolyol, herstellbar aus Rizinusöl, Ethylenoxid und Propylenoxid unter Verwendung eines DMC-Katalysators, mit einem OH-Wert im Bereich von 20 bis 50 mg KOH/ g, einer Viskosität von 500 bis 1500 mPas, einer Säurezahl von 0,001 bis 0,1, und einem Gehalt an primären OH-Gruppen im Bereich von 20 % bis 40 %.

Die erfindungsgemäßen Polyetherole können unter anderem auch zur Herstellung von feststoffgefüllten Polyetherolen (auch Polymerpolyetherole, polymergefüllte Polyetherole oder Graftpolyetherole genannt) verwendet werden.

Feststoffgefüllte Polyole sind eine spezielle Art von Polyoldispersionen.

Polyol-Dispersionen umfassen eine kontinuierliche Phase (flüssig) und eine feste Phase, die in der kontinuierlichen Phase dispergiert ist. Dabei umfasst die kontinuierliche Phase mindestens ein Polyol, und optional weitere Komponenten, wie zum Beispiel zusätzlich ein Polyisobuten. Die feste Phase umfasst mindestens einen Füllstoff; die Füllstoffe sind dabei bevorzugt ausgewählt aus polymeren, organischen oder anorganischen Füllstoffen, oder einer Mischung daraus.

Bei Polymer-Polyolen sind die Füllstoffe ausgewählt aus polymeren Füllstoffen, insbesondere aus Copolymeren von Styrol mit Acrylnitril.

Graft-Polyole bzw. Polymerpolyole werden in der Polyurethan (PU)-Industrie als Rohstoff eingesetzt, um die Härte- und die Elastizitätseigenschaften in PU-Weichschaumstoffen einzustellen. Es handelt sich hierbei in der Regel um Polyetherole (kontinuierliche Phase), die gefüllt sind mit einem Copolymer aus Styrol und Acrylnitril (Stryrol-Acrylnitril-Polymer, SAN; als Füllstoff, feste Phase). Das Verfahren der Herstellung der Polymer-Polyole umfasst die Copolymerisation von ethylenisch ungesättigten Monomeren mit einem Makromer.

Derartige Polyole sind seit langem bekannt und beispielsweise in WO 03/78496 beschrieben. Unter Verwendung von Graft-Polyolen hergestellte Schäume zeichnen sich meist durch eine höhere Härte und eine verbesserte Offenzelligkeit aus.

Das Makromer erfüllt die Funktion der sterischen Stabilisierung der sich bildenden SAN-Partikel und verhindert somit eine Agglomeration oder Ausflockung der SAN-Partikel. Ferner können durch die verwendete Menge an Makromer die Partikelgrößen gezielt eingestellt werden. Als Makromere werden üblicherweise mehrfunktionelle Polyetherole verwendet, die nachträglich mit einer ungesättigen Bindung versehen wurden, die radikalisch mit den Comonomeren polymerisiert werden kann.

Bevorzugt ist mindestens einer, besonders bevorzugt sind alle, der Füllstoffe ausgewählt aus der Gruppe umfassend Polystyrol, Poly-(Styrol-co-Acrylnitril), Polyacrylnitril, Polyacrylat, Polymethacrylat, Polyolefin, wie z. B. Polypropylen, Polyethylen, Polyisobutylen, Polybutadien, Polyeseter, Polyamid, Polyvinylchlorid, Polyethylenterephthalat, Polyethylenglycol, Schwefel, Phosphor, Silikat-Materialien (wie z. B. Silica-Nanopartikel), Metalloxide, Metallcarbonate, anorganische Salze, anorganische Pigmente, Kohlenstoff (wie z. B. Graphit, Nano-Röhren, Fasern), Melamin, Harnstoff, Cellulose (wie z. B. Fasern, Nanopartikel, kristalline Cellulose).

Die Füllstoffe können untereinander vermischt werden, und die Gesamtmenge der Füllstoffe, bezogen auf den Gesamtansatz, beträgt bevorzugt zwischen 1 und 70 Gew.-%, besonders bevorzugt zwischen 5 und 60 Gew.-%.

Die Verteilung der Füllstoffe kann monomodal, bimodal oder multimodal sein.

In einer Ausführungsform beträgt die Partikelgröße mindestens eines, bevorzugt aller, der Füllstoffe jeweils von 0,05 $\mu$m - 500 $\mu$m, besonders bevorzugt von 0,1 $\mu$m-20 $\mu$m.

Ein weiterer Gegenstand der vorliegenden Erfindung betrifft also ein Verfahren zur Herstellung von feststoffgefüllten Polyetherolen, wobei ein nach dem erfindungsgemäßen Verfahren herstellbares Polyetherol mit mindestens einem ungesättigten Monomeren in Gegenwart eines Makromonomers umgesetzt wird.

Dabei sind die ungesättigten Monomere bevorzugt ausgewählt aus der Gruppe umfassend Styrol, $\alpha$-Methylstyrol und Acrylnitril.

Das Makromonomer ist vorzugsweise gemäß der Lehre von WO 99031160 A1 bzw. US 4 954 561 B1 ein Umsetzungprodukt eines mehrfunktionellen Polyetherpolyols mit einer Funktionalität von 2-6, bevorzugt von 3-6 und einem mittleren Molekulargewicht von 1.000 - 50.000, bevorzugt von 5.000 - 20.000 mit einem ethylenisch ungesättigten, radikalisch polymerisierbaren Isocyanat, bevorzugt 1,1-Dimethyl-meta-isopropenylbenzylisocyanat (TMI) oder Isocyanatoethylmethacrylat (IEM). Alternativ kann das Makromer auch ein Umsetzungsprodukt eines mehrfunktionellen Polyetherpolyols mit einer Funktionalität von 2-6, bevorzugt von 3-6 und einem mittleren Molekulargewicht von 1.000 - 50.000, bevorzugt von 5.000 - 20.000 mit einem ungesättigten cyclischen Anhydrid, vorzugsweise Maleinsäureanhydrid mit anschließender Umsetzung der resultierenden Zwischenstufe mit Alkylenoxiden sein. Eine weitere Möglichkeit besteht darin, ein Makromer einzusetzen, das gemäß der Lehre von EP 1 624 004 B1 durch Umsetzung eines mehrfunktionellen Polyetherpolyols mit einem (Meth)acrylat oder (Meth)acrylsäure herstellbar ist.

Als feststoffgefüllte Polyetherole sind auch Polyisocyanat-Polyadditions-Polyole (PI-PA-Polyole) zu nennen. Die vorliegende Erfindung betrifft also auch ein Verfahren zur Herstellung von Polyisocyanat-Polyadditions-Polyolen (PIPA-Polyolen), bei dem Polyisocyanate, vorzugsweise Toluylendiisocyanat (TDI), Diphenylmethandiisocyanat (MDI) und/ oder Polymethylenpolyphenylenpolyisocyanaten (Roh-MDI) mit niedermolekularen Verbindungen, die mehrere Hydroxy-, primäre Amino- und/oder sekundäre Aminofunktionalitäten aufweisen, in Gegenwart von Verbindungen mit mindestens zwei gegenüber Isocyanaten reaktionsfähigen Wasserstoffatomen mit einem Molekulargewicht im Bereich von 500 bis 10000 g/mol sowie gegebenenfalls Katalysatoren umgesetzt werden. Dabei sind die Verbindungen mit mindestens zwei gegenüber Isocyanaten reaktionsfähigen Wasserstoffatomen bevorzugt ausgewählt aus der Gruppe der nach dem erfindungsgemäßen herstellbaren Polyetherpolyole. Die niedermolekularen Verbindungen sind vorzugsweise ausgewählt aus der Gruppe der Alkanolamine, insbesondere Triethanolamin und/oder Diethanolamin analog zur Lehre von WO 00/73364 A1.

Auch Polyole mit dispergierten Polyharnstoffen, auch als Polyharnstoffdispersionspolyole (PHD-Polyole) bezeichnet, fallen in die Klasse der feststoffgefüllten Polyetherpolyole und sind somit Gegenstand der vorliegenden Erfindung.

Für ihre Herstellung werden Polyamine mit primären und/oder sekundären Aminogruppen verwendet, die mit Mono-, Di- und/oder Polyisocyanaten zu Polyharnstoffdispersionen umgesetzt werden. Die verwendeten Basispolyetherole sind zumeist di- und/ oder höherfunktionell.

Bevorzugt werden die Basispolyetherole ausgewählt aus der Gruppe der nach dem erfindungsgemäßen herstellbaren Polyetherpolyole.

In einer weiteren Ausführungsform eines feststoffgefüllten Polyetherols wird als Flammschutzmittel eine Dispersion von Melamin in Verbindung mit mindestens einem Amin sowie mindestens einem organischen und/oder modifizierten organischen Isocyanat in der Polyolkomponente eingesetzt. Hierbei werden die Polyole bevorzugt ausgewählt aus der Gruppe der nach dem erfindungsgemäßen herstellbaren Polyetherpolyole.

Das erfindungsgemäße Verfahren zur Herstellung von feststoffgefüllten Polyetherolen kann auch Schritte eines Schmelzemulgierverfahrens umfassen, wie es beispielsweise in WO 2009 138 379 A2 sowie WO 0 228 937 A2 und WO 09 155 427 A2 beschrieben ist.

Ein weiterer Gegenstand der vorliegenden Erfindung betrifft die Verwendung des nach dem erfindungsgemäßen Verfahren herstellbaren Polyetherpolyols, und/ oder des aus dem nach dem erfindungsgemäßen Verfahren herstellbaren Polyetherols herstellbaren feststoffgefüllten Polyetherols, zur Herstellung von Polyurethanen und/ oder Polyurethan-Formulierungen, insbesondere von Polyurethan-Blockweichschaum-Formulierungen, Polyurethan-Formweichschaum-Formulierungen, Polyurethan-Schuh-Formulierungen oder Polyurethan-Elastomer-Formulierungen.

Die erfindungsgemäßen Polyetherole können in verschiedenen Polyurethananwendungen eingesetzt werden, vor allem dann, wenn die Polyurethane elastische Eigenschaften aufweisen sollen, wie z. B. bei Elastomeren. Die erfindungsgemäßen Polyetherole sind vorteilhaft einsetzbar in der Herstellung von hochelastischen Polyurethanblock- oder Polyurethanformweichschaumstoffen. In der Herstellung von hochelastischen Polyurethanblock- oder Polyurethanformweichschaumstoffen werden diese Polyole umgesetzt mit MDI, TDI oder MDI/ TDI-Mischungen oder mit den entsprechenden Isocyanat-terminierten Präpolymeren. Dabei können die üblicherweise verwendeten petrochemisch basierten Polyetherole entweder teilweise oder vollständig durch die erfindungsgemäßen Polyetherole ersetzt werden.

Typische hochelastische Polyurethanweichschaumstoffe weisen Rückprallelastizitätswerte nach DIN EN ISO 8307 von 45-60% auf. (The polyurethanes book, Randall, Lee, eds. Wiley 2002, ISBN 0470850418). Die erforderlichen Polyole werden üblicherweise auch als HR- oder Reaktiv-Polyole bezeichnet. Reaktiv-Polyole besitzen üblicherweise einen Poly(ethylenoxid)-Endblock von 13 bis 20 %, wodurch die Polyole 80 bis 90 % reaktive primäre Hydroxygruppen aufweisen.

Die erfindungsgemäßen Polyole haben üblicherweise ähnliche EO-Gehalte, unterscheiden sich aber im Anteil an primären Hydroxygruppen (siehe oben).

Überraschenderweise wurde gefunden, dass die erfindungsgemäßen Polyole als Hauptpolyol in der A-Komponente (Polyolkomponente) einer typischen Schaumformulierung für hochelastische Polyurethanweichschaumstoffe verwendet werden kann. Der Begriff Hauptpolyol meint in diesem Zusammenhang, dass das Polyol mit mehr als 50 Gew.% der gesamten A-Komponente eingeht.

Einer weiterer Gegenstand der vorliegenden Erfindung ist somit ein Verfahren zur Herstellung von Polyurethan-Weichschaumstoffen durch katalysierte Umsetzung von

a) Polyisocyanaten mit

b) Verbindungen mit mindestens zwei mit Isocyanat-Gruppen reaktiven Wasserstoffatomen

c) Treibmitteln,

dadurch gekennzeichnet, dass die Verbindungen mit mindestens zwei Isocyanatgruppen reaktiven Wasserstoffatomen b)

bi) 40-100 Gew.teile des erfindungsgemäß herstellbaren Polyetherols

bii) 0-60 Gew.teile eines Standard Reaktiv-Polyols

biii) 0-60 Gew.teile eines Graft-Polyols

biv) 0-10 Gew.teile eines Cellopener-Polyols

bv) 0-10 Gew.teile eines Crosslinkers

enthalten.

Die beschriebenen Polyetheralkohole bi) können allein oder im Gemisch mit anderen Verbindungen mit mindestens zwei mit Isocyanatgruppen reaktiven Wasserstoffatomen zu Polyurethan-Weichschaumstoffen umgesetzt werden.

Die Herstellung der erfindungsgemässen Polyurethan-Weichschaumstoffe erfolgt durch Umsetzung der Polyetheralkohole mit Polyisocyanaten. Die Umsetzung erfolgt üblicherweise in Anwesenheit von Treibmitteln, Katalysatoren und üblichen Hilfs- und/oder Zusatzstoffen. Zu den verwendeten Einsatzstoffen ist im Einzelnen folgendes zu sagen.

Als Polyisocyanate a) kommen alle Isocyanate mit zwei oder mehreren Isocyanatgruppen im Molekül zum Einsatz. Dabei können aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI) verwendet werden. Es ist auch möglich, Isocyanate einzusetzen, die durch den Einbau von Urethan-, Uretdion-, Isocyanurat-, Allophanat, Uretonimin- und anderen Gruppen modifiziert wurden, sogenannte modifizierte Isocyanate.

Vorzugsweise werden als Polyisocyanate a) TDI oder MDI, seine höheren Homologen und/ oder dessen Umsetzungsprodukte mit Verbindungen mit mindestens zwei mit Isocyanatgruppen reaktiven Wasserstoffatomen eingesetzt.

Für die Herstellung von Blockweichschaumstoffen wird insbesondere TDI eingesetzt, während bei der bevorzugten Herstellung von Formschäumen vorzugsweise MDI und seine höheren Homologen eingesetzt werden.

Als Verbindungen mit mindestens zwei mit Isocyanatgruppen reaktiven Gruppen, die, falls erforderlich, im Gemisch mit den erfindungsgemäßen Polyetheralkoholen eingesetzt werden, werden vorzugsweise Polyole verwendet. Unter den Polyolen haben die Polyetherpolyole und die Polyesterpolyole die grösste technische Bedeutung. Die zur Herstellung von Polyurethanen eingesetzten Polyetherpolyole werden zumeist durch basisch katalysierte Anlagerung von Alkylenoxiden, insbesondere Ethylenoxid und/ oder Propylenoxid, an H-funktionelle Startsubstanzen hergestellt. Polyesterpolyole werden zumeist durch Veresterung von mehrfunktionellen Carbonsäuren mit mehrfunktionellen Alkoholen hergestellt. Die eingesetzten Polyole weisen vorzugsweise eine Hydroxylzahl im Bereich zwischen 20 und 100 mgKOH/ g und eine Funktionalität im Bereich zwischen 2 und 4 auf.

Besonders bevorzugt werden Standard-Reaktiv-Polyole (bii) zugesetzt, mit OH-Werten von 20-40 mg KOH/ g, insbesondere 25-35 mg KOH/ g, mit einem Ethylenoxid-Cap von 10 bis 30 Gew.%, insbesondere 13 bis 23%, und einer mittleren Funktionalität von 2-6, insbesondere 3-5. Mit mittlerer Funktionalität ist hier die mittlere Funktionalität der Starter oder des Starter-Gemisches gemeint. Als Starter können beispielsweise Glyzerin, Trimethylolpropan, Pentaerythritol, Sorbitol, Sucrose, Triethanolamin und Ethylendiamin oder Gemische davon eingesetzt werden.

In einer besonderen Ausführungsform der Erfindung kann die Komponente b) mindestens ein sogenanntes Graftpolyol enthalten (biii). Derartige Polyole werden, wie oben erwähnt, in der Regel durch in-situ-Polymerisation von ethylenisch ungesättigten Monomeren, insbesondere Styrol und/ oder Acrylnitril, in Trägerpolyolen, vorzugsweise Polyetheralkoholen, hergestellt.

In einer besonderen Ausführungsform ist das Trägerpolyol gleich (bi).

Die Polymerisation erfolgt üblicherweise in Anwesenheit von Initiatoren, Polymerisationsreglem und Polyolen mit eingebauten ethylenisch ungesättigten Bindungen, häufig auch als Makromere bezeichnet. Derartige Polyole sind seit langem bekannt und beispielsweise in WO 03/78496 beschrieben. Für das erfindungsgemässe Verfahren bevorzugte Graft-Polyole haben eine Hydroxylzahl im Bereich zwischen 10 und 50 mg KOH/g, eine Funktionalität von 2 bis 4 und einen Gehalt an Feststoffen von 35 bis 50 Gew.-%. Unter Verwendung von Graft-Polyolen hergestellte Schäume zeichnen sich meist durch eine höhere Härte und eine verbesserte Offenzelligkeit aus.

Weiterhin können bevorzugt andere Polyole zugesetzt werden, wie Ethylenoxid-Propylenoxid-Polyether-Polyole mit einem Ethylenoxidgehalt von 50-80 % und Hydroxylzahlen von 28-55 mg KOH/g (Cellopener-Polyole, biv). Solche Polyole werden eingesetzt zur Verbesserung der Verarbeitung und der mechanischen Eigenschaften.

Zu den Verbindungen mit mindestens zwei mit Isocyanatgruppen reaktiven Gruppen gehören auch die Kettenverlängerer und/ oder Vernetzer (Crosslinker), die gegebenenfalls mit eingesetzt werden können (bv). Dabei handelt es sich um mindestens zweifunktionelle Amine und/ oder Alkohole mit Molekulargewichten im Bereich von 60 bis 400 g/mol.

Als Treibmittel (c) werden zumeist Wasser, bei der Reaktionstemperatur der Urethanreaktion gasförmige, gegenüber den Ausgangsstoffen der Polyurethane inerte Verbindungen, und/ oder sogenannte physikalisch wirkende Treibmittel, sowie Gemische daraus eingesetzt. Als physikalisch wirkende Treibmittel werden zumeist Kohlenwasserstoffe mit 2 bis 6 Kohlenstoffatomen, halogenierte Kohlenwasserstoffe mit 2 bis 6 Kohlenstoffatomen, Ketone, Acetale, Ether, Inertgase wie Kohlendioxid oder Edelgase eingesetzt.

Als Katalysatoren werden im erfindungsgemäßen Verfahren zur Herstellung von PU-Weichschaumstoffen vorzugsweise Aminverbindungen und/ oder Metallverbindungen, insbesondere Schwermetallsalze und/ oder metallorganische Verbindungen, eingesetzt. Insbesondere werden als Katalysatoren bekannte tertiäre Amine und/ oder mit organische Metallverbindungen verwendet. Als organische Metallverbindungen kommen z.B. Zinnverbindungen in Frage, wie beispielsweise Zinn-(II)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Als für diesen Zweck übliche organische Amine seien beispielhaft genannt: Triethylendiamin, Bis(N,N-dimethylaminoethyl)ether, N,N-dimethylethanolamine, Dimethyl-2-hydroxy(propyl)1,3-propylendiamin, N,N-dimethylhexadecylamin, Pentamethyldipropylentriamin, Triethylamin, 1,4-Diazabicyclo-[2.2.2]-oktan, Tributylamin, Dimethylbenzylamin, N,N,N',N'-Tetramethylethylendiamin, N,N,N',N'-Tetramethylbutandiamin, N,N,N',N'-Tetramethyl-hexan-1,6-diamin, Dimethylcyclohexylamin. Die beschriebenen Katalysatoren können einzeln oder in Form von Mischungen eingesetzt werden.

Es können im erfindungsgemäßen Verfahren zur Herstellung von PU-Weichschaumstoffen weitere Hilfsmittel und/ oder Zusatzstoffe zugegeben werden, wie beispielsweise Trennmittel, Flammschutzmittel, Farbstoffe, Füllstoffe und/ oder Verstärkungsmittel.

In der Technik ist es üblich, alle Einsatzstoffe mit Ausnahme der Polyisocyanate zu einer sogenannten Polyolkomponente (A-Komponente) zu vermischen und diese mit den Polyisocyanaten zum Polyurethan umzusetzen.

Die Herstellung der Polyurethane kann nach dem sogenannten one-shot-Verfahren oder nach dem Prepolymerverfahren erfolgen.

Eine Übersicht über die Einsatzstoffe für die Herstellung von Polyurethanen sowie die dazu angewendeten Verfahren findet sich beispielsweise im Kunststoffhandbuch, Band 7 "Polyurethane", Carl-Hanser-Verlag München Wien, 1. Auflage 1966, 2. Auflage 1983 und 3. Auflage 1993.

Die nach dem erfindungsgemäßen Verfahren hergestellten Polyurethan-Weichschaumstoffe zeichnen sich durch eine hohe Luftdurchlässigkeit und gute mechanische Eigenschaften, insbesondere eine hohe Rückprallelastizität, aus.

Die erfindungsgemäßen Polyetherole können zum Beispiel ebenfalls für die Herstellung von Weichschaumstoffen nach dem Heißformschaum-Prozess verwendet werden. Hierbei wird üblicherweise TDI (Toluol-2,4-Diisocyanat) als IsocyanatKomponente genutzt. Die Polyole können ebenfalls für die Herstellung von Polyurethan-Schuhsohlen verwendet werden. In diesem Prozess wird vorzugsweise MDI (Dimethyl-Methan-Isocyanat) als Isocyanatkomponente verwendet. Ferner können die erfindungsgemäßen Polyole zur Herstellung von Polyurethanbeschichtungen, - klebstoffen, -dichtstoffen oder-elastomeren ("Coatings, adhesives, sealants, elastomers", C.A.S.E.) eingesetzt werden.

Die erfindungsgemäßen Polyole können nicht nur in der A-Komponente (Polyolkomponente) der Polyurethan-Formulierung, sondern auch in der B-Komponente (Isocyanatkomponente) in Form von Präpolymeren verwendet werden. Präpolymere basierend auf den erfindungsgemäßen Polyolen können in allen oben genannten Anwendungen verwendet werden. Isocyanat-terminierte Präpolymere werden durch Umsetzung der erfindungsgemäßen Polyetherole mit einem Überschuss des organischen Isocyanates oder aus Mischungen verschiedener organischer Isocyanate hergestellt.

Die erfindungsgemäßen Polyetherole können in Kombination mit petrochemisch basierten Polyolen, wie den schon genannten Polyethern und Polyestern, sowie auch mit Polyacetalen, Polycarbonaten, Polyetherestern, Polyestercarbonaten, Polythioethern, Polyamiden, Polyesteramiden, Polysiloxanen, Polybutadienen und/ oder Polyacetonen in Polyurethanformulierungen eingesetzt werden.

Die Formulierungen, insbesondere die Polyurethan-Weichschaumstoffformulierungen, in denen die erfindungsgemäßen Polyetherole eingesetzt werden können, enthalten in der Regel weitere Additive wie Schaumstabilisatoren, Katalysatoren, Zellregulatoren, Reaktionsverzögerer, Flammschutzmittel, Weichmacher, Pigmente oder Füllstoffe.

In einer bevorzugten Ausführungsform enthält ein Polyurethan, das unter Verwendung der erfindungsgemäßen Polyetherpolyole hergestellt wurde, zumindest 1 Gew.%, bevorzugt mehr als 3%, besonders bevorzugt mehr als 5% von dem verwendeten nachwachsenden Rohstoff in der Formulierung.

Die Erfindung soll an den nachfolgenden Beispielen näher erläutert werden, wobei die Beispiele die Erfindung nur illustrieren, jedoch keinesfalls den Umfang der Erfindung einschränken sollen.

Beispiele

Allgemeines

Lupranol® 1100 ist ein zweifunktionelles Polyetherol der BASF Polyurethanes GmbH mit einer Hydroxyzahl von 104 mg KOH/g.

Synthese der erfindungsgemäßen Polyetherole

Beispiel A

144,6 kg Rizinusöl DAB 10 mit einem Hydroxywert von 162 mg KOH/g wurden in einem Druckautoklaven vorgelegt und mit 1,85 kg einer 5,4%igen Suspension eines Zinkhexacyanocobaltat-Katalysators in Lupranol® 1100 versetzt. Nachdem die Reaktionsmischung dreimal mit Stickstoff inertisiert worden war, wurde zur Entfernung von Wasser für ca. 30 Minuten auf 15 mbar bei 130°C evakuiert. Anschließend wurden zunächst zur Aktivierung des DMC-Katalysators ein Gemisch aus 13 kg Propylenoxid und 2 kg Ethylenoxid zur Reaktionsmischung innerhalb von 10 Minuten dosiert. Nach der Aktivierung des Katalysators, die sich durch eine Temperaturerhöhung in Kombination mit einem Druckabfall im Reaktor bemerkbar machte, wurden zunächst weitere 341 kg Propylenoxid und 47,9 kg Ethylenoxid zur Reaktionsmischung innerhalb von 90 Minuten dosiert. Nach beendeter Monomerdosierung und nach Erreichen eines konstanten Reaktordruckes wurde der Druck des Reaktors mit Stickstoff auf 3,5 bar erhöht und eine Mischung aus 46,6 kg Propylenoxid und 69,8 kg Ethylenoxid als Endblock dosiert. Anschließend folgte wiederum eine Nachreaktionsphase, bis ein konstanter Reaktordruck erreicht war. Flüchtige Bestandteile wurden sodann im Vakuum abdestilliert und das Produkt abgelassen. Es wurden so 650 kg des gewünschten biobasierten Polyetherols in Form einer klaren und phasenstabilen, schwach gelblichen, viskosen Flüssigkeit erhalten.

| | | |
|---|---|---|
| Hydroxywert: | 34,4 mgKOH/g | (DIN 53240) |
| Viskosität (bei 25°C): | 1035 mPas | (DIN 51550) |
| Säurezahl: | 0,012 mg KOH/g | (DIN EN ISO 2682) |
| Wasserwert: | 0,027% | (DIN 51777) |
| Hazenfarbzahl: | 35 mg Pt/t | (DIN 53409) |
| Primäre Hydroxygruppen: | 26% | (Bestimmung durch 1H-NMR-Spektroskopie) |
| pH-Wert: | 7,7 | |

Beispiel B

144,6 kg Rizinusöl DAB 10 mit einem Hydroxywert von 162 mg KOH/g wurden in einem Druckautoklaven vorgelegt und mit 1,85 kg einer 5,4%igen Suspension eines Zinkhexacyanocobaltat-Katalysators in Lupranol® 1100 versetzt. Nachdem die Reaktionsmischung dreimal mit Stickstoff inertisiert worden war, wurde zur Entfernung von Wasser für ca. 30 Minuten auf 15 mbar bei 130°C evakuiert. Anschließend wurde zunächst zur Aktivierung des DMC-Katalysators ein Gemisch aus 13 kg Propylenoxid und 2 kg Ethylenoxid zur Reaktionsmischung innerhalb von 10 Minuten dosiert. Nach der Aktivierung des Katalysators, die sich durch eine Temperaturerhöhung in Kombination mit einem Druckabfall im Reaktor bemerkbar machte, wurden zunächst weitere 335 kg Propylenoxid und 37,9 kg Ethylenoxid zur Reaktionsmischung innerhalb von 90 Minuten dosiert. Nach beendeter Monomerdosierung und nach Erreichen eines konstanten Reaktordruckes wurde der Druck des Reaktors mit Stickstoff auf 3,5 bar erhöht und eine Mischung aus 53,2 kg Propylenoxid und 79,8 kg Ethylenoxid als Endblock dosiert. Anschließend folgte wiederum eine Nachreaktionsphase, bis ein konstanter Reaktordruck erreicht war. Flüchtige Bestandteile wurden sodann im Vakuum abdestilliert und das Produkt abgelassen. Es wurden so 650 kg des gewünschten biobasierten Polyetherols in Form einer klaren und phasenstabilen, schwach gelblichen, viskosen Flüssigkeit erhalten.

| | | |
|---|---|---|
| Hydroxywert: | 35,2 mgKOH/g | (DIN 53240) |
| Viskosität (bei 25°C): | 1000 mPas | (DIN 51550) |
| Säurezahl: | 0,010 mg KOH/g | (DIN EN ISO 2682) |
| Wasserwert: | 0,017% | (DIN 51777) |
| Hazenfarbzahl: | 30 mg Pt/t | (DIN 53409) |
| Primäre Hydroxygruppen: | 25% | (Bestimmung durch 1H-NMR-Spektroskopie) |
| pH-Wert: | 7,7 | |

Beispiel C

144,6 kg Rizinusöl DAB mit einem Hydroxywert von 162 mg KOH/g wurden in einem Druckautoklaven vorgelegt und mit 1,85 kg einer 5,4%igen Suspension eines Zinkhexacyanocobaltat-Katalysators in Lupranol® 1100 versetzt. Nachdem die Reaktionsmischung dreimal mit Stickstoff inertisiert worden war, wurde zur Entfernung von Wasser für ca. 30 Minuten auf 15 mbar bei 130°C evakuiert. Anschließend wurden zunächst zur Aktivierung des DMC-Katalysators ein Gemisch aus 13 kg Propylenoxid und 2 kg Ethylenoxid zur Reaktionsmischung innerhalb von 10 Minuten dosiert. Nach der Aktivierung des Katalysators, die sich durch eine Temperaturerhöhung in Kombination mit einem Druckabfall im Reaktor bemerkbar machte, wurden zunächst weitere 350 kg Propylenoxid und 93,6 kg Ethylenoxid zur Reaktionsmischung innerhalb von 90 Minuten dosiert. Nach beendeter Monomerdosierung und nach Erreichen eines konstanten Reaktordruckes wurde der Druck des Reaktors mit Stickstoff auf 3,5 bar erhöht und eine Mischung aus 25,0 kg Propylenoxid und 37,5 kg Ethylenoxid als Endblock dosiert. Anschließend folgte wiederum eine Nachreaktionsphase, bis ein konstanter Reaktordruck erreicht war. Flüchtige Bestandteile wurden sodann im Vakuum abdestilliert und das Produkt abgelassen. Es wurden so 650 kg des gewünschten biobasierten Polyetherols in Form einer klaren und phasenstabilen, schwach gelblichen, viskosen Flüssigkeit erhalten.

| | | |
|---|---|---|
| Hydroxywert: | 35,8 mgKOH/g | (DIN 53240) |
| Viskosität (bei 25°C): | 958 mPas | (DIN 51550) |
| Säurezahl: | 0,012 mg KOH/g | (DIN EN ISO 2682) |
| Wasserwert: | 0,015% | (DIN 51777) |
| Hazenfarbzahl: | 30 mg Pt/t | (DIN 53409) |
| Primäre Hydroxygruppen: | 26% | (Bestimmung durch 1H-NMR-Spektroskopie) |
| pH-Wert: | 7,9 | |

Synthese der Vergleichsbeispiele

Vergleichsbeispiel A

951 g Rizinusöl DAB 10 mit einem Hydroxywert von 162 mg KOH/g wurden in einem Druckautoklaven vorgelegt und mit 14,0 g einer 5,47%igen Suspension eines Zinkhexacyanocobaltats in Lupranol® 1100 versetzt. Nachdem die Reaktionsmischung dreimal mit Stickstoff inertisiert worden war, wurde zur Entfernung von Wasser für ca. 30 Minuten auf 15 mbar bei 130°C evakuiert. Anschließend wurden zunächst zur Aktivierung des DMC-Katalysators ein Gemisch aus 85,2 g Propylenoxid und 11,4 g Ethylenoxid zur Reaktionsmischung innerhalb von 10 Minuten dosiert. Nach der Aktivierung des Katalysators, die sich durch eine Temperaturerhöhung in Kombination mit einem Druckabfall im Reaktor bemerkbar machte, wurden zunächst weitere 2578,4 g Propylenoxid und 345,6 g Ethylenoxid zur Reaktionsmischung innerhalb von 90 Minuten dosiert. Nach beendeter Monomerdosierung und nach Erreichen eines konstanten Reaktordruckes wurde der Druck des Reaktors mit Stickstoff auf 3,5 bar erhöht und eine Mischung aus 82,4 g Propylenoxid und 329,5 g Ethylenoxid als Endblock dosiert. Anschließend folgte wiederum eine Nachreaktionsphase, bis ein konstanter Reaktordruck erreicht war. Flüchtige Bestandteile wurden sodann im Vakuum abdestilliert und das Produkt abgelassen. Es wurden so 4300 g eines trüben Polyetherols erhalten, das sich nach mehreren Tagen in zwei Phasen separiert.

| Hydroxywert: | 36,2 mgKOH/g | (DIN 53240) |
| Viskosität (bei 25°C): | 1040 mPas | (DIN 51550) |
| Primäre Hydroxygruppen: | 32 % | (Bestimmung durch 1H-NMR-Spektroskopie) |

Vergleichsbeispiel B

969,3 g Rizinusöl DAB 10 mit einem Hydroxywert von 162 mg KOH/g wurden in einem Druckautoklaven vorgelegt und mit 14,3 g einer 5,47%igen Suspension eines Zinkhexacyanocobaltat-Katalysators in Lupranol® 1100 versetzt. Nachdem die Reaktionsmischung dreimal mit Stickstoff inertisiert worden war, wurde zur Entfernung von Wasser für ca. 30 Minuten auf 15 mbar bei 130°C evakuiert. Anschließend wurden zunächst zur Aktivierung des DMC-Katalysators 120 g Propylenoxid zur Reaktionsmischung innerhalb von 10 Minuten dosiert. Nach der Aktivierung des Katalysators, die sich durch eine Temperaturerhöhung in Kombination mit einem Druckabfall im Reaktor bemerkbar machte, wurden zunächst weitere 1921,9 g Propylenoxid innerhalb von 90 Minuten dosiert. Nach beendeter Dosierung und nach Erreichen eines konstanten Reaktordruckes wurde der Druck des Reaktors mit Stickstoff auf 3,5 bar erhöht und eine Mischung aus 583,4 g Propylenoxid und 875,1 g Ethylenoxid als Endblock dosiert. Anschließend folgte wiederum eine Nachreaktionsphase, bis ein konstanter Reaktordruck erreicht war. Flüchtige Bestandteile wurden sodann im Vakuum abdestilliert und das Produkt abgelassen. Es wurden 4400 g eines klaren und phasenstabilen Polyetherols erhalten.

| Hydroxywert: | 35,0 mgKOH/g | (DIN 53240) |
| Viskosität (bei 25°C): | 1003 mPas | (DIN 51550) |
| Säurezahl: | 0,07 mg KOH/g | (DIN EN ISO 2682) |
| Wasserwert: | 0,02% | (DIN 51777) |
| Primäre Hydroxygruppen: | 30 % | (Bestimmung durch 1H-NMR-Spektroskopie) |

Anwendungsbeispiele:

Die Herstellung von Proben für die mechanische Prüfung wurde wie hier unten beschrieben durchgeführt. Die zur Herstellung der Polymermaterialien der Beispiele verwendeten Einsatzstoffe sind in Tabelle 1a-b wiedergegeben.

Tabelle 1a: Polyole

| Polyol | Struktur | OH-Zahl | EO-Gehalt | Beschreibung |
|---|---|---|---|---|
| Polyol 1 | GLY - PO - EO | 35 | 14 | Reaktivpolyol |
| Polyol 2 | GLY -EO - PO heteric | 42 | 75 | Zellöffner-polyol |
| Polyol 3 | Polymer-Polyol, 45% Feststoffgehalt | 19 | 14 | Reaktiv-Polymerpolyol für Molded-Anwendungen |
| GLY = Glycerin, EO = Ethylenoxid, PO = Propylenoxid, | | | | |

Tabelle 1b: Isocyanate und Additive

| Handelsname | Hersteller | Beschreibung |
|---|---|---|
| Isocyanat 1 | BASF | MDI-Prepolymer |
| Isocyanat 2 | BASF | TDI 80/20 |
| Tegostab 8715LF | Goldschmidt | Tensid |
| Tegostab B 8616 | Goldschmidt | Tensid |
| Niax A-1 | Air Products | Amin-Katalysator |
| Dabco 33 LV | Air products | Amin-Katalysator |
| Kosmos 29 | Air products | Zinn-Katalysator |
| Ortegol 204 | Air products | Tensid |

(fortgesetzt)

| Handelsname | Hersteller | Beschreibung |
|---|---|---|
| Diethanolamin | BASF | Vernetzer |
| Dabco 2025 | Air products | Amin-Katalysator |

MDI - Basierter Formschaum (Handversuch):

Die Polyolformulierung (A-Komponente) wurde nach Rezepturvorgabe auf einer Laborwaage bei Raumtemperatur eingewogen. Der erhaltene Blend wurde mit einem Laborrührer 1 Minute lang homogenisiert und dann 30 Minuten bei Raumtemperatur belassen. Als B-Komponente wurde ein Prepolymer genommen, hergestellt aus einem Gemisch aus 2-kernigem MDI mit einem Gehalt von 40% Gew.% 2,4'MDI und 60 Gew.% 4,4'MDI und Polymer-MDI (Lupranat M20W - BASF), prepolymerisiert mit Polyol 2. Das Verhältnis zwischen 2-kernigem MDI, polymer-MDI und Polyol 2 in dem Prepolymer betrug 55,0 / 40,0 / 5,0. Der NCO-Wert des Prepolymers betrug 30,7% (Isocyanat 1). Das Prepolymer wurde auf bekannte Weise hergestellt (siehe z.B. EP1471086). Die Verschäumung wurde bei einem Isocyanat-Index von 90 durchgeführt.

Zum Verschäumen wurden die benötigten Mengen A- und B-Komponente in einen 2,5L Eimer eingewogen. Nach 10 Sekunden langem Rühren mit einem Laborrührer bei 1500 U/min wurde das Gemisch in eine 50°C warme 16L Form (Größe 40x40x10 cm$^3$) gegossen. Die Einwage in der Form betrug 960g; dies entspricht einer Formdichte von 50kg/m$^3$. Nach 6 min wurde der Schaum aus der Form genommen und innerhalb von 30 Minuten von Hand gewalkt.

TDI - Basierter Schaum (Handversuch):

Die Polyolformulierung (A-Komponente) wurde nach Rezepturvorgabe, aber ohne Zinnkatalysator, auf einer Laborwaage bei Raumtemperatur eingewogen. Der erhaltene Blend wurde mit einem Laborrührer 1 Minute lang homogenisiert und dann 30 Minuten bei Raumtemperatur belassen.

Zum Verschäumen wurde die benötigte Menge A-Komponente in einen 2,5L Eimer eingewogen und die entsprechende Menge Zinn-Katalysator zugegeben. Nach Katalysatorzugabe wurde kurz verrührt. In dem nächsten Arbeitsschritt wurde das TDI zugegeben. Nach 10 Sekunden langem Rühren mit einem Laborrührer bei 1500 U/min wurde das Gemisch in einen 10,7L Würfel (Größe 22x22x22cm$^3$) gegossen. Die Verschäumung wurde bei einem Isocyanat-Index von 100 durchgeführt. Die Einwaage betrug 650g. Nach 30 min wurde der Schaum aus der Form genommen und am nächsten Tag von Hand gewalkt.

Mechanische Prüfung:

Die Bestimmung des Raumgewichts erfolgte nach DIN EN ISO 845, die Bestimmung der Stauchhärte nach DIN EN ISO 3386, die Bestimmung der Zugfestigkeit und Bruchdehnung nach DIN EN ISO1798, die Bestimmung des Druckverformungsrestes und die Bestimmung der Feucht-Wärme Alterung (HACS) erfolgt nach DIN EN ISO 1856, die Bestimmung der Luftdurchlässigkeit nach DIN EN ISO 7231, die Bestimmung der Rückprallelastizität nach DIN EN ISO 8307 und die Bestimmung der Weiterreißfestigkeit nach DIN ISO 34-,B.

Die Bestimmung des Wet Compression-Sets erfolgt nach internen Prüfmethoden, abgeleitet von ISO13362. Die Probekörper werden gesägt auf l x b x $H_o$ = 50*50*25mm$^3$, gestaucht auf 70% der ursprünglichen Höhe ($H_o$) auf 7,5mm ($H_a$) und gelagert bei 50°C und 95% relativer Luftfeuchtigkeit für 22 Stunden. Die Druckverformung ($H_t$) wurde nach 30 Minuten gemessen. Der Wet Set wurde berechnet gemäß Gleichung (1):

$$\text{Wet Set} = [(H_o - H_t) / (H_o - H_a)] * 100\% \qquad (1)$$

Anwendungsbeispiele I-III:

| Beispiel | | I | II | III |
|---|---|---|---|---|
| | | | | |

(fortgesetzt)

| Rezeptur | | | | |
|---|---|---|---|---|
| Polyol A | Teile | 75 | | |
| Polyol B | Teile | | 75 | |
| Polyol C | Teile | | | 75 |
| Polyol 1 (L2095) | Teile | 17.45 | 17.45 | 17,45 |
| Polyol 2 (L2048) | Teile | 3.5 | 3.5 | 3,5 |
| Tegostab B 8715 LF | Teile | 0.5 | 0.5 | 0,5 |
| Dabco 2025 | Teile | 0.4 | 0.4 | 0,4 |
| Dabco 33 LV | Teile | 0.45 | 0.45 | 0,45 |
| Leitungswasser | Teile | 2.6 | 2.6 | 2,6 |
| | | | | |
| Isocyanat 1 | Index=90 | | | |
| | | | | |
| Reaktionszeiten | | | | |
| Startzeit | s | 17 | 17 | 18 |
| Abbindezeit | s | 120 | 118 | 119 |
| | | | | |
| Eigenschaften | | | | |
| Raumgewicht | kg/m^3 | 49.3 | 49.4 | 48,8 |
| Stauchhärte 25% | kPa | 2.1 | 2.0 | 2,1 |
| Stauchhärte 40% | kPa | 2.7 | 2.6 | 2,7 |
| Stauchhärte 65% | kPa | 5.7 | 5.6 | 5,7 |
| Hysterese | % | 16.1 | 17.1 | 15,1 |
| Zugfestigkeit | kPa | 70 | 65 | 70 |
| Bruchdehnung | % | 98 | 92 | 97 |
| Weiterreißwiderstand | N/mm | 0.41 | 0.45 | 0,38 |
| Luftdurchlässigkeit | dm^3/s | 0.89 | 0.92 | 1,19 |
| Rückprallelastizität | % | 59 | 55 | 60 |
| Beispiel | | I | II | III |
| Druckverformung 50% | % | 4.3 | 4.4 | 4,0 |
| wet compression set | % | 10.1 | 9.4 | 9,4 |
| HACS 1 Zyklus | % | 11.3 | 12.1 | 9,4 |

Anwendungsbeispiele IV-VI:

| Beispiel | | IV | V | VI |
|---|---|---|---|---|
| | | | | |

(fortgesetzt)

| Rezeptur | | | | |
|---|---|---|---|---|
| Polyol Beispiel A | Teile | 60 | | |
| Polyol Beispiel B | Teile | | 60 | |
| Polyol Beispiel C | Teile | | | 60 |
| Polyol 2 (L2048) | Teile | 3 | 3 | 3 |
| Polyol 3 (L4800N) | Teile | 37 | 27 | 37 |
| Dabco 33 LV | Teile | 0.12 | 0.12 | 0.12 |
| Niax A 1 | Teile | 0.05 | 0.05 | 0.05 |
| Diethanolamin | Teile | 1.0 | 1.0 | 1.0 |
| Ortegol 204 | Teile | 1.5 | 1.5 | 1.5 |
| Tegostab B 8616 | Teile | 1.0 | 1.0 | 1.0 |
| Wasser | Teile | 2.0 | 2.0 | 2.0 |
| Kosmos 29 | Teile | 0.11 | 0.11 | 0.1 |
| | | | | |
| Isocyanat 2 | Index =100 | | | |
| | | | | |
| | | | | |
| Reaktionszeiten | | | | |
| Startzeit | s | 14 | 13 | 13 |
| Abbindezeit | s | 115 | 115 | 110 |
| | | | | |
| Eigenschaften | | | | |
| Raumgewicht | kg/m^3 | 38.0 | 36.6 | 36.7 |
| Stauchhärte 25% | kPa | 2.9 | 2.8 | 2.9 |
| Stauchhärte 40% | kPa | 3.6 | 3.4 | 3.5 |
| Stauchhärte 65% | kPa | 7.4 | 7.0 | 7.4 |
| Hysterese | % | 24.2 | 24.0 | 24.9 |
| Zugfestigkeit | kPa | 93 | 83 | 88 |
| Bruchdehnung | % | 102 | 101 | 97 |
| Weiterreißwiderstand | N/mm | 0.53 | 0.59 | 0.54 |
| Beispiel | | IV | V | VI |
| Luftdurchlässigkeit | dm^3/ s | 0.411 | 0.342 | 0.450 |
| Rückprallelastizität | % | 55 | 54 | 52 |
| Druckverformung 50% | % | 3.2 | 3.9 | 3.7 |
| wet compression set | % | 10.8 | 9.9 | 13.4 |
| HACS 1 Zyklus | % | 4.3 | 5.5 | 5.9 |

Anwendung, Vergleichsbeispiele

Vergleichsbeispiel I:

Das Polyol-Vergleichsbeispiel B wurde sowohl in der MDI-Schaumrezeptur als auch in der TDI-Schaumrezeptur ausgetestet. In beiden Fällen gab es sehr geschlossene Schäume, die nicht mehr gewalkt werden konnten. Nach Abkühlung waren die Schäume sehr stark geschrumpft. Auch die üblichen Rezepturanpassungen, wie Reduktion des Gelkatalysators (Dabco 33LV, Zinnoctoat) oder extra Zugabe des Zellöffners Polyol (Polyol 2), brachten keine vernünftigen Schäume.

Die experimentellen Daten zeigen somit, dass die erfindungsgemäßen Polyetherole klar und phasenstabil sind sowie eine hohe Reaktivität, zum Beispiel in PU-Anwendungen, aufweisen. Zudem können die erfindungsgemäßen Polyetherole, im Vergleich mit konventionellen (in der Regel Petrochemie-basierten) Polyetherolen, gut in PU-Formulierungen verarbeitet werden und ergeben vorteilhafte mechanische Eigenschaften.

## Patentansprüche

1. Verfahren zur Herstellung von Polyetherpolyolen, wobei Rizinusöl unter Zuhilfenahme eines Doppelmetallcyanid-Katalysators in mindestens zwei Verfahrensabschnitten mit jeweils einem Gemisch aus Ethylenoxid und mindestens einem weiteren von Ethylenoxid verschiedenen Alkylenoxid zur Reaktion gebracht wird, und wobei das Gemisch aus Ethylenoxid und mindestens einem weiteren von Ethylenoxid verschiedenen Alkylenoxid im letzten Verfahrensabschnitt Ethylenoxid, in Bezug zur Gesamtmasse aller weiteren im Gemisch enthaltenen von Athylenoxid verschiedenen Alkylenoxide, in einem Massenanteil im Bereich von 35:65 bis 75:25, bevorzugt von 40:60 bis 70:30, umfasst, und wobei das Gemisch aus Ethylenoxid und mindestens einem weiteren von Ethylenoxid verschiedenen Alkylenoxid in den dem letzten Verfahrensschritt vorausgehenden Verfahrensabschnitten jeweils Ethylenoxid, in Bezug zur Gesamtmasse aller weiteren im Gemisch enthaltenen von Ethylenoxid verschiedenen Alkylenoxide, in einem Massenanteil im Bereich von 35:65 bis 1:99, bevorzugt von 30:70 bis 5:95, umfasst.

2. Verfahren zur Herstellung von Polyetherpolyolen gemäß einem der vorangehenden Ansprüche, wobei in mindestens einem Verfahrensabschnitt mindestens ein weiteres von Ethylenoxid verschiedenes Alkylenoxid des jeweiligen Gemischs ausgewählt ist aus der Gruppe umfassend Propylenoxid, 1,2-Butylenoxid, 2,3-Butylenoxid.

3. Verfahren zur Herstellung von Polyetherpolyolen gemäß einem der vorangehenden Ansprüche, wobei das Verfahren genau zwei Verfahrensabschnitte umfasst.

4. Verfahren zur Herstellung von Polyetherpolyolen gemäß einem der vorangehenden Ansprüche, wobei das Gemisch aus Ethylenoxid und mindestens einem weiteren von Ethylenoxid verschiedenen Alkylenoxid in mindestens einem Verfahrensabschnitt genau ein weiteres von Ethylenoxid verschiedenes Alkylenoxid enthält.

5. Verfahren zur Herstellung von Polyetherpolyolen gemäß einem der vorangehenden Ansprüche, wobei in mindestens einem Verfahrensabschnitt mindestens ein weiteres von Ethylenoxid verschiedenes Alkylenoxid des jeweiligen Gemischs Propylenoxid ist.

6. Polyetherpolyol, herstellbar gemäß dem Verfahren eines der vorangehenden Ansprüche.

7. Polyetherpolyol gemäß Anspruch 6, wobei der Anteil biobasierter Rohstoffe im Polyetherpolyol 10 Gew.% bis 40 Gew.% beträgt, und/oder wobei die OH-Zahl des Polyetherpolyols 100 bis 10 mg KOH/g beträgt, und/oder wobei der Massenanteil der insgesamt im Polyetherpolyol enthaltenen Ethylenoxid-Einheiten, in Bezug auf alle enthaltenen Alkylenoxid-Einheiten, von 10 bis 35 Gew.% beträgt.

8. Verfahren zur Herstellung von feststoffgefüllten Polyetherolen, wobei ein Polyetherol gemäß Anspruch 6 oder 7 mit mindestens einem ungesättigten Monomeren in Gegenwart eines Makromonomers umgesetzt wird.

9. Verwendung des gemäß einem der Ansprüche 1 bis 5 herstellbaren Polyetherpolyols und/ oder des gemäß Anspruch 8 herstellbaren feststoffgefüllten Polyetherols zur Herstellung von Polyurethanen und/ oder Polyurethan-Formulierungen, insbesondere von Polyurethan-Blockweichschaum-Formulierungen, Polyurethan-Formweichschaum-Formulierungen, Polyurethan-Schuh-Formulierungen oder Polyurethan-Elastomer-Formulierungen.

**10.** Verfahren zur Herstellung von Polyurethan-Weichschaumstoffen durch katalysierte Umsetzung von

a) Polyisocyanaten mit
b) Verbindungen mit mindestens zwei mit Isocyanat-Gruppen reaktiven Wasserstoffatomen
c) Treibmitteln,
**dadurch gekennzeichnet, dass** die Verbindungen mit mindestens zwei Isocyanatgruppen reaktiven Wasserstoffatomen b)

bi) 40-100 Gew.teile des gemäß einem der Ansprüche 1 bis 5 herstellbaren Polyetherols
bii) 0-60 Gew.teile eines Standard Reaktiv-Polyols
biii) 0-60 Gew.teile eines Graft-Polyols
biv) 0-10 Gew.teile eines Cellopener-Polyols
bv) 0-10 Gew.teile eines Crosslinkers enthalten.

**Claims**

**1.** A process for preparing polyether polyols, wherein castor oil is reacted with the aid of a double metal cyanide catalyst in at least two process sections with in each case a mixture of ethylene oxide and at least one further alkylene oxide different from ethylene oxide, and the mixture of ethylene oxide and at least one further alkylene oxide different from ethylene oxide in the last process section comprises ethylene oxide in a proportion by mass of the total mass of all further alkylene oxides different from ethylene oxide which are comprised in the mixture in the range from 35:65 to 75:25, preferably from 40:60 to 70:30, and the mixture of ethylene oxide and at least one further alkylene oxide different from ethylene oxide in the process sections preceding the last process section in each case comprises ethylene oxide in a proportion by mass of the total mass of all further alkylene oxides different from ethylene oxide which are comprised in the mixture in the range from 35:65 to 1:99, preferably from 30:70 to 5:95.

**2.** The process for preparing polyether polyols according to the preceding claim, wherein, in at least one process section, at least one further alkylene oxide different from ethylene oxide in the respective mixture is selected from the group consisting of propylene oxide, 1,2-butylene oxide, 2,3-butylene oxide.

**3.** The process for preparing polyether polyols according to either of the preceding claims, wherein the process comprises precisely two process sections.

**4.** The process for preparing polyether polyols according to any of the preceding claims, wherein the mixture of ethylene oxide and at least one further alkylene oxide different from ethylene oxide in at least one process section comprises precisely one further alkylene oxide different from ethylene oxide.

**5.** The process for preparing polyether polyols according to any of the preceding claims, wherein at least one further alkylene oxide different from ethylene oxide in the respective mixture in at least one process section is propylene oxide.

**6.** A polyether polyol which can be prepared by the process according to any of the preceding claims.

**7.** The polyether polyol according to claim 6, wherein the proportion of biobased raw materials in the polyether polyols is from 10% by weight to 40% by weight and/or the OH number of the polyether polyol is from 100 to 10 mg KOH/g and/or the proportion by mass of the total ethylene oxide units comprised in the polyether polyol, based on all alkylene oxide units comprised, of from 10 to 35% by weight.

**8.** A process for preparing solid-filled polyetherols, wherein a polyetherol according to claim 6 or 7 is reacted with at least one unsaturated monomer in the presence of a macromonomer.

**9.** The use of the polyether polyol which can be prepared according to any of claims 1 to 5 and/or the solid-filled polyetherol which can be prepared according to claim 8 for producing polyurethanes and/or polyurethane formulations, in particular slabstock flexible polyurethane foam formulations, molded flexible polyurethane foam formulations, polyurethane shoe formulations or polyurethane elastomer formulations.

**10.** A process for producing flexible polyurethane foams by catalyzed reaction of

a) polyisocyanates with

b) compounds having at least two hydrogen atoms which are reactive toward isocyanate groups,

c) blowing agents,

wherein the compounds b) having at least two hydrogen atoms which are reactive toward isocyanate groups comprise

bi) 40-100 parts by weight of the polyetherol which can be prepared according to any of claims 1 to 8,

bii) 0-60 parts by weight of a standard reactive polyol,

biii)0-60 parts by weight of a graft polyol, biv)0-10 parts by weight of a cell-opener polyol, bv) 0-10 parts by weight of a crosslinker.

**Revendications**

1. Procédé pour la préparation de polyétherpolyols, dans lequel on fait réagir de l'huile de ricin à l'aide d'un catalyseur de type cyanure métallique double dans au moins deux sections de procédé avec à chaque fois un mélange d'oxyde d'éthylène et d'au moins un autre oxyde d'alkylène différent de l'oxyde d'éthylène, et dans lequel le mélange d'oxyde d'éthylène et d'au moins un autre oxyde d'alkylène différent de l'oxyde d'éthylène comprend, dans la dernière section de procédé, l'oxyde d'éthylène, par rapport à la masse totale de tous les autres oxydes d'alkylène, différents de l'oxyde d'éthylène, contenus dans le mélange, en une proportion massique dans la plage de 35:65 à 75:25, de préférence dans la plage de 40:60 à 70:30, et dans lequel le mélange d'oxyde d'éthylène et d'au moins un autre oxyde d'alkylène, différent de l'oxyde d'éthylène, comprend, dans les sections de procédé précédent la dernière étape de procédé, à chaque fois l'oxyde d'éthylène, par rapport à la masse totale de tous les autres oxydes d'alkylène, différents de l'oxyde d'éthylène, contenus dans le mélange, en une proportion massique dans la plage de 35:65 à 1:99, de préférence de 30:70 à 5:95.

2. Procédé pour la préparation de polyétherpolyols selon la revendication précédente, dans lequel, dans au moins une section de procédé, au moins un autre oxyde d'alkylène, différent de l'oxyde d'éthylène, du mélange est choisi dans le groupe comprenant l'oxyde de propylène, l'oxyde de 1,2-butylène, l'oxyde de 2,3-butylène.

3. Procédé pour la préparation de polyétherpolyols selon l'une quelconque des revendications précédentes, le procédé présentant exactement deux sections de procédé.

4. Procédé pour la préparation de polyétherpolyols selon quelconque l'une des revendications précédentes, dans lequel le mélange d'oxyde d'éthylène et d'au moins un autre oxyde d'alkylène, différent de l'oxyde d'éthylène, contient, dans au moins une section de procédé, exactement un autre oxyde d'alkylène différent de l'oxyde d'éthylène.

5. Procédé pour la préparation de polyétherpolyols selon quelconque l'une des revendications précédentes, dans lequel, dans au moins une section de procédé, au moins un autre oxyde d'alkylène, différent de l'oxyde d'éthylène, du mélange est l'oxyde de propylène.

6. Polyétherpolyol pouvant être préparé selon le procédé selon l'une quelconque des revendications précédentes.

7. Polyétherpolyol selon la revendication 6, dans lequel la proportion de matières premières biologiques dans le polyétherpolyol est de 10% en poids à 40% en poids et/ou dans lequel l'indice d'OH du polyétherpolyol est de 100 à 10 mg de KOH/g, et/ou dans lequel la proportion massique des unités d'oxyde d'éthylène contenues au total dans le polyétherpolyol, par rapport à toutes les unités d'oxyde d'alkylène contenues, est de 10 à 35% en poids.

8. Procédé pour la préparation de polyéthérols chargés de solides, dans lequel un polyétherol selon la revendication 6 ou 7 est transformé avec au moins un monomère insaturé en présence d'un macromonomère.

9. Utilisation du polyétherpolyol pouvant être préparé selon l'une quelconque des revendications 1 à 5 et/ou du polyétherol chargé de solides pouvant être préparé selon la revendication 8 pour la fabrication de polyuréthanes et/ou de formulations de polyuréthane, en particulier de formulations de mousses souples à blocs de polyuréthane, de formulations de mousses souples façonnés de polyuréthane, de formulations pour chaussures de polyuréthane ou de formulations d'élastomère de polyuréthane.

10. Procédé pour la fabrication de mousses souples de polyuréthane par transformation catalysée de

a) polyisocyanates avec

b) des composés présentant au moins deux atomes d'hydrogène réactifs avec les groupes isocyanate,

c) des agents gonflants,

**caractérisé en ce que** les composés b) présentant au moins deux atomes d'hydrogène réactifs avec les groupes isocyanate contiennent

bi) 40-100 parties en poids du polyétherol pouvant être préparé selon l'une quelconque des revendications 1 à 5

bii) 0-60 parties en poids d'un polyol réactif standard

biii) 0-60 parties en poids d'un polyol greffé

biv) 0-10 parties en poids d'un polyol d'ouverture de cellules

bv) 0-10 parties en poids d'un réticulant.

**EP 2 563 839 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 08073729 A2
- WO 04096744 A2
- WO 2007019051 A1
- EP 0259722 B1
- EP 1112243 B1
- JP 5163342 A
- WO 06047436 A1
- EP 1537159 B1
- EP 1842866 A1
- EP 1712576 A1
- US 5563221 A
- DE 102004047406
- EP 9700306 A
- EP 1790678 A1
- EP 1632513 B1
- EP 1022300 B1
- US 5605939 A1
- US 3404109 A
- US 3427256 A
- US 3427334 A
- US 3427335 A
- US 3829505 A
- US 3941849 A
- US 4472560 A
- US 4477589 A
- US 5158922 A
- US 5470813 A
- US 5482908 A
- US 5545601 A
- EP 0700949 A
- EP 0743093 A
- EP 0761708 A
- WO 9740086 A
- WO 9816310 A
- WO 0047649 A
- JP 4145123 B
- WO 9852689 A
- DD 203734735
- EP 879259 B1
- WO 9729146 A
- WO 9803571 A
- US 5689012 A
- US 20070265367 A
- US 5145883 A
- US 3538043 A
- US 5032671 A
- US 20070088146 A
- WO 2007020879 A
- US 20080021154 A
- DE 102008000243
- WO 0378496 A
- WO 99031160 A1
- US 4954561 B1
- EP 1624004 B1
- WO 0073364 A1
- WO 2009138379 A2
- WO 0228937 A2
- WO 09155427 A2
- EP 1471086 A

**In der Beschreibung aufgeführte Nicht-Patentliteratur**

- The polyurethanes book. Wiley, 2002
- Kunststoffhandbuch. Polyurethane. Carl-Hanser-Verlag, 1966, vol. 7
- POLYURETHANE. 1983
- POLYURETHANE. 1993

22